# EUROPEAN PATENT APPLICATION

(11) **EP 4 818 558 A1**
(43) Date of publication of application: **07.10.2026**
(21) Application number: 24896482.7
(22) Date of filing: 25.11.2024
(51) Int. Cl.: F16K 11/07

(54) **SWITCHING VALVE AND REFRIGERATION SYSTEM**

(30) Priority: 28.11.2023 CN 202323236278 U; 28.11.2023 CN 202323219079 U
(71) Applicant: Zhejiang Dunan Artificial Environment Co., Ltd., Shaoxing, Zhejiang 311800 (CN)
(72) Inventor: YANG, Zhongyu, Shaoxing, Zhejiang 311800 (CN); CAI, Peiyu, Shaoxing, Zhejiang 311800 (CN); FANG, Qidi, Shaoxing, Zhejiang 311800 (CN)
(74) Representative: Studio Torta S.p.A.
(86) International application number: PCT/CN2024/134316
(87) International publication number: WO 2025/113393

(57) **Abstract**

Disclosed is a switching valve, comprising a valve seat (210) and a piston assembly (220), wherein the valve seat (210) is provided with a valve cavity (211a) adapted for the flow of a fluid; and the piston assembly (220) is configured to be driven by the pressure of the fluid, and is movably accommodated in the valve cavity (211a). In the movement direction of the piston assembly (220), the valve cavity (211a) is provided with a first sub-cavity (213), a second sub-cavity (214) and a third sub-cavity (215), the second sub-cavity (214) being arranged between the first sub-cavity (213) and the third sub-cavity (215). The valve cavity (211a) is further provided with a first valve port (216) for communicating the second sub-cavity (214) with the third sub-cavity (215), and a second valve port (217) for communicating the first sub-cavity (213) with the second sub-cavity (214). The valve seat (210) is further provided with a first through hole (213a), a second through hole (214a) and a third through hole (215a), the first through hole (213a) being in communication with the first sub-cavity (213), the second through hole (214a) being in communication with the second sub-cavity (214), and the third through hole (215a) being in communication with the third sub-cavity (215). In a first position, the piston assembly (220) seals off the first valve port (216) while opening the second valve port (217); in a second position, the piston assembly (220) seals off the second valve port (217) while opening the first valve port (216). Further disclosed are a refrigeration system using the switching valve, and a four-way valve.

## Description

### CROSS REFERENCE

The present disclosure claims priority to Chinese Patent Application No. 202323219079.0 titled "Switching Valve and Refrigeration System" and to Chinese Patent Application No. 202323236278.2 titled "Four-way Valve," both of which are filed on November 28, 2023 and incorporated herein by reference in their entireties.

### TECHNICAL FIELD

The present disclosure relates to the field of refrigeration technology and, more particularly, to a switching valve and a refrigeration system.

### BACKGROUND

Switching valves in the related art typically employ electromagnetic drive to achieve switching between different flow paths, which have problems of complex valve structures and high costs.

### SUMMARY

Embodiments of the present disclosure provide a switching valve and a refrigeration system, which can achieve flow path switching by a fluid pressure difference within the switching valve, and solve the problems of complex structures and high costs in the related art.

A switching valve according to embodiments of the present disclosure includes:
a valve seat having a valve cavity for fluid flow; and
a piston assembly configured to be driven by fluid pressure and movably accommodated in the valve cavity,
wherein the valve cavity has a first sub-cavity, a second sub-cavity, and a third sub-cavity in a movement direction of the piston assembly, and the second sub-cavity is between the first sub-cavity and the second sub-cavity; the valve cavity is further provided with a first valve port for connecting the second sub-cavity and the third sub-cavity, and a second valve port for connecting the first sub-cavity and the second sub-cavity;
the valve seat further has a first through hole, a second through hole, and a third through hole, the first through hole is in communication with the first sub-cavity, the second through hole is in communication with the second sub-cavity, and the third through hole is in communication with the third sub-cavity;
in a first position, the piston assembly closes the first valve port and opens the second valve port; and in a second position, the piston assembly closes the second valve port and opens the first valve port.

According to some embodiments of the present disclosure, the piston assembly is movably connected to the valve seat through a guide structure, and the guide structure is configured to guide the piston assembly to move along the movement direction.

According to some embodiments of the present disclosure, the piston assembly includes two movable members arranged along the movement direction, and the two movable members are linked; in the first position, one of the movable members closes the first valve port; and in the second position, the other of the movable members closes the second valve port;
each of the movable members is movably connected to the valve seat through one guide structure.

According to some embodiments of the present disclosure, the guide structure includes a guide groove and a guide column, the guide groove is provided on one of the valve seat and the movable member, the guide column is provided on the other of the valve seat and the movable member, the guide column is inserted into the guide groove, and the guide column is in a guiding fit with the guide groove along the movement direction.

According to some embodiments of the present disclosure, each guide column is provided with a receiving groove with an opening facing a bottom surface of the guide groove;
the switching valve further includes two elastic members accommodated in two receiving grooves, respectively; two ends of each elastic member abut against the bottom surface of the guide groove and a bottom surface of the receiving groove, respectively; each elastic member is configured to apply elastic force to one movable member corresponding to the elastic member to move the movable member towards the other movable member.

According to some embodiments of the present disclosure, the valve seat includes a seat body and two stop members, the seat body has the first sub-cavity, the second sub-cavity, and the third sub-cavity, and the seat body is further provided with the first through hole and the third through hole on both sides of the seat body along the movement direction; the two stop members are fixed in the first through hole and the third through hole, respectively; the two movable members are located between the two stop members; each of the movable members is movably connected to the stop member through one guide structure.

According to some embodiments of the present disclosure, the guide structure includes a guide rod and a guide hole, the guide rod is provided on one of the movable member and the stop member, the guide hole is provided on the other of the movable member and the stop member, the guide rod is inserted through the guide hole, and the guide rod is in a guiding fit with the guide hole in the movement direction.

According to some embodiments of the present disclosure, the switching valve further includes two elastic members fitted over on outer peripheries of the two guide rods, respectively; two ends of each elastic member abut against the stop member and the movable member, respectively; each elastic member is configured to apply elastic force to one movable member corresponding to the elastic member to move the movable member towards the other movable member.

According to some embodiments of the present disclosure, the piston assembly includes a first closing portion configured to close the first valve port and a second closing portion configured to close the second valve port, and the first closing portion and the second closing portion are spaced apart along the movement direction;
a side of the first closing portion facing away from the second closing portion has a first pressure-receiving surface, and a side of the second closing portion facing away from the first closing portion has a second pressure-receiving surface;
in the first position, there is a first gap between the second pressure-receiving surface and an inner wall surface of the valve cavity; and in the second position, there is a second gap between the first pressure-receiving surface and the inner wall surface of the valve cavity.

According to some embodiments of the present disclosure, the valve seat includes a hollow cylinder and two blocking members, an interior of the cylinder defines a cavity, two axial ends of the cylinder are provided with openings in communication with the cavity, the two blocking members are connected to the two axial ends of the cylinder and block two openings, respectively, and the cylinder and the two blocking members jointly form the valve cavity;
the cylinder has a first inner ring surface and a second inner ring surface, the first inner ring surface surrounds the third sub-cavity, and the second inner ring surface surrounds the first sub-cavity;
an outer periphery of the piston assembly has a first outer ring surface in a guiding fit with the first inner ring surface, and a second outer ring surface in a guiding fit with the second inner ring surface.

According to some embodiments of the present disclosure, the piston assembly includes two movable members arranged along the movement direction, which are defined as a first movable member and a second movable member; in the first position, the first movable member closes the first valve port; in the second position, the second movable member closes the second valve port;
an inner wall surface of the cylinder is further provided with a first annular protrusion and a second annular protrusion, which are spaced apart along an axial direction of the cylinder; the first annular protrusion is located between the second sub-cavity and the third sub-cavity and defines the first valve port; the second annular protrusion is located between the first sub-cavity and the second sub-cavity and defines the second valve port.

According to some embodiments of the present disclosure, the switching valve further includes two elastic members; two ends of one of the elastic members abut against the first annular protrusion and the first movable member, respectively, to apply elastic force to the first movable member to move away from the second movable member; two ends of the other of the elastic members abut against the second annular protrusion and the second movable member, respectively, to apply elastic force to the second movable member to move away from the first movable member.

According to some embodiments of the present disclosure, the valve seat includes a valve body and a valve core; the valve body has the first sub-cavity, the second sub-cavity, and the third sub-cavity; the valve core is limited in the second sub-cavity; the valve body is further provided with the first through hole, the second through hole, and the third through hole;
the valve core is a sleeve with openings at both axial ends and has an inner cavity; the piston assembly is movably inserted through the inner cavity; the inner cavity of the valve core is in communication with the second sub-cavity, and the inner cavity is provided with the first valve port and the second valve port.

According to some embodiments of the present disclosure, the valve core further has an inner surface facing the inner cavity and an outer surface facing away from the inner cavity; the valve core further has a through bore that penetrates the inner surface and the outer surface; and the inner cavity is in communication with the second sub-cavity via the through bore.

According to some embodiments of the present disclosure, the inner surface of the valve core is further provided with a middle portion, and the middle portion has a guiding hole that penetrates the middle portion along the movement direction;
the piston assembly includes a first movable member, a second movable member, and a connecting rod; the first movable member is movably disposed in the inner cavity and configured to close the first valve port; the second movable member is movably disposed in the inner cavity and configured to close the second valve port; the connecting rod is inserted through the guiding hole; and two axial ends of the connecting rod are connected to the first movable member and the second movable member, respectively.

According to some embodiments of the present disclosure, the switching valve further includes two elastic members fitted over an outer periphery of the connecting rod; two ends of one of the elastic members abut against the first movable member and a side surface of the middle portion facing the first movable member, respectively; two ends of the other of the elastic members abut against the second movable member and a side surface of the middle portion facing the second movable member, respectively.

A refrigeration system according to embodiments of the present disclosure includes:
a device having a fluid outlet and a fluid inlet, a pressure of a fluid flowing out of the device from the fluid outlet being greater than a pressure of a fluid flowing into the device from the fluid inlet; and
a switching valve having a first through hole, a second through hole, and a third through hole, the second through hole of the switching valve being in communication with the fluid inlet,
wherein the device has a first working condition and a second working condition;
in the first working condition, the fluid outlet is in communication with the first through hole, or the fluid outlet is simultaneously in communication with the first through hole and the third through hole; the piston assembly within the switching valve is driven by a fluid pressure difference to cause the switching valve to switch so that the second through hole is in communication with the third through hole;
in the second working condition, the fluid outlet is in communication with the third through hole, or the fluid outlet is simultaneously in communication with the first through hole and the third through hole; the piston assembly within the switching valve is driven by a fluid pressure difference to cause the switching valve to switch so that the first through hole is in communication with the second through hole.

One of the embodiments disclosed above has at least the following advantages or beneficial effects:
In the switching valve according to embodiments of the present disclosure, the piston assembly is movable within the valve seat under the drive of the fluid pressure, allowing communication between the first through hole and the second through hole or communication between the second through hole and the third through hole, thus achieving a flow path switching effect. Compared to valves that employ electromagnetic drive to achieve flow path switching in the related art, the switching valve according to embodiments of the present disclosure has advantages of a simpler structure and lower cost.

### BRIEF DESCRIPTION OF THE DRAWINGS

FIG. 1 is a schematic view of a switching valve of a first embodiment of the present disclosure.
FIG. 2 is a sectional view taken along A-A line in FIG. 1, with a piston assembly in a second position.
FIG. 3 is an exploded view of the switching valve of the first embodiment of the present disclosure.
FIG. 4 is a sectional view of a cylinder in FIG. 2.
FIG. 5 is a schematic view of a switching valve of a second embodiment of the present disclosure.
FIG. 6 is a sectional view taken along B-B line in FIG. 5, with a piston assembly in a second position.
FIG. 7 is an exploded view of the switching valve of the second embodiment of the present disclosure.
FIG. 8 is a sectional view of a cylinder in FIG. 6.
FIG. 9 is a schematic view of a switching valve of a third embodiment of the present disclosure.
FIG. 10 is a sectional view taken along C-C line in FIG. 9, with a piston assembly between a first position and a second position.
FIG. 11 is an exploded view of the switching valve of the third embodiment of the present disclosure.
FIG. 12 is a sectional view of a valve body in FIG. 10.
FIG. 13 is a schematic view of a switching valve of a fourth embodiment of the present disclosure.
FIG. 14 is a sectional view taken along D-D line in FIG. 13, with a piston assembly in a middle position between a first position and a second position.
FIG. 15 is an exploded view of the switching valve of the fourth embodiment of the present disclosure.
FIG. 16 is a schematic view of a refrigeration system of a first embodiment of the present disclosure in a cooling mode.
FIG. 17 is a schematic view of the refrigeration system of the first embodiment of the present disclosure in a heating mode.
FIG. 18 is a schematic view of a refrigeration system of a second embodiment of the present disclosure in a cooling mode.
FIG. 19 is a schematic view of the refrigeration system of the second embodiment of the present disclosure in a heating mode.
FIGS. 20 and 21 are schematic views of a switching valve of a first embodiment of the present disclosure mounted in a mounting seat from two different angles of view.
FIG. 22 is a schematic view of a four-way valve from another angle of view according to an exemplary embodiment.
FIG. 23 is a schematic view of a mounting seat from one angle of view according to an exemplary embodiment.
FIG. 24 is a schematic view of a mounting seat from another angle of view according to an exemplary embodiment.
FIG. 25 is a sectional view taken along F-F line in FIG. 24.
FIG. 26 is a sectional view taken along E-E line in FIG. 22, with a piston assembly in a second position and a second piston assembly in a fourth position.

Reference numerals are explained as follows:
20. switching valve
210. valve seat; 210a. seat body; 210b. first stop member; 210c. second stop member; 211. cylinder; 211a. valve cavity; 211b. opening; 211c. cavity; 212a. first blocking member; 212b. second blocking member; 213. first sub-cavity; 213a. first through hole; 213b. second inner ring surface; 214. second sub-cavity; 214a. second through hole; 215. third sub-cavity; 215a. third through hole; 215b. first inner ring surface; 216. first valve port; 217. second valve port; 218. first annular protrusion; 2181. first annular conical surface; 2182. first annular tip; 219. second annular protrusion; 2191. second annular conical surface; 2192. second annular tip;
220. piston assembly; 221. first movable member; 2211. first closing portion; 2211a. first pressure-receiving surface; 2211b. first outer ring surface; 2211c. first sealing gasket; 2211d. first groove; 2211e. third perforation; 2212. first extension portion; 222. second movable member; 2221. second closing portion; 2221a. second pressure-receiving surface; 2221b. second outer ring surface; 2221c. second sealing gasket; 2221d. second groove; 2221e. fourth perforation; 2222. second extension portion; 223. connecting rod;
231. first guide structure; 2311. first guide groove; 2312. first guide column; 2312a. first receiving groove; 2312b. first perforation; 2313. first guide rod; 2314. first guide hole; 232. second guide structure; 2321. second guide groove; 2322. second guide column; 2322a. second receiving groove; 2322b. second perforation; 2323. second guide rod; 2324. second guide hole;
241. first elastic member; 242. second elastic member;
251. first retaining spring; 252. second retaining spring; 253. first step structure; 254. second step structure; 255. first retaining groove; 256. second retaining groove;
261. valve body; 262. valve core; 262a. inner cavity; 262b. inner surface; 262c. outer surface; 2621. through bore; 263. limiting member; 264. middle portion; 2641. guiding hole;
41. outdoor heat exchanger; 42. indoor heat exchanger; 50. expansion valve; 61. first valve; 62. second valve; 63. three-way valve; 631. inlet; 632. first outlet; 633. second outlet; 70. compressor; 71. fluid inlet; 72. fluid outlet;
D. movement direction;
10. mounting seat; 101. first outer surface; 102. second outer surface; 103. third outer surface; 104. fourth outer surface; 105. fifth outer surface; 110. first flow channel; 111. first opening; 120. second flow channel; 121. second opening; 130. third flow channel; 131. third opening; 140. fourth flow channel; 141. fourth opening; 150. first chamber; 151. first mounting channel; 1511. fifth opening; 152. first communication channel; 153. second communication channel; 154. third communication channel; 160. second chamber; 161. second mounting channel; 1611. sixth opening; 162. fourth communication channel; 163. fifth communication channel; 164. sixth communication channel; 171. first sealing member; 172. second sealing member; 173. third sealing member; 174. fourth sealing member; 175. fifth sealing member; 176. sixth sealing member; 177. seventh sealing member; 178. eighth sealing member;
30. second valve assembly; 310. second valve seat; 311. third valve port; 312. fourth valve port; 313. second valve cavity; 320. second piston assembly;
D1. first direction; D2. second direction; D3. third direction.

### DETAILED DESCRIPTION

Exemplary embodiments will now be described more comprehensively with reference to accompanying drawings. However, the exemplary embodiments may be implemented in various forms, and it should not be construed as being limited to the embodiments described herein; instead, these embodiments are provided to make the present disclosure comprehensive and complete, and concepts of the exemplary embodiments may be fully conveyed to those skilled in the art. Identical reference numerals in the drawings denote same or similar structures, and hence a detailed description thereof will be omitted.

It can be understood that terms "including" and "having" as well as any variations thereof in embodiments of the present disclosure are intended to cover non-exclusive inclusions. For example, a process, method, system, product, or device that includes a series of steps or units is not limited to the listed steps or units, but may optionally include steps or units that are not listed, or may optionally include other steps or components inherent to the process, method, product, or device.

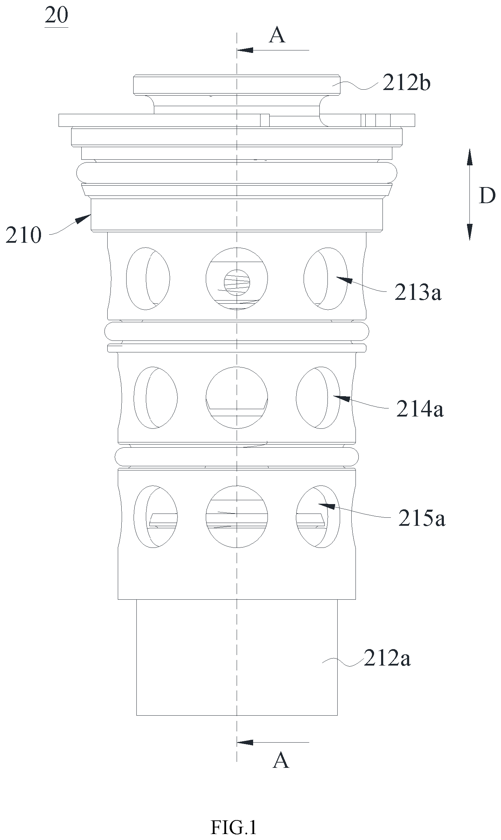

As shown in FIGS. 1 to 3, a switching valve 20 according to a first embodiment of the present disclosure includes a valve seat 210 and a piston assembly 220. The valve seat 210 has a valve cavity 211a for fluid flow. The piston assembly 220 is configured to be driven by fluid pressure and is movably accommodated in the valve cavity 211a, to switch a flow path of the switching valve 20.

In one embodiment, the valve seat 210 may include a hollow cylinder 211 and two blocking members (212a, 212b). An interior of the cylinder 211 defines a cavity 211c, and two axial ends of the cylinder 211 are provided with openings 211b in communication with the cavity 211c. The two blocking members (212a, 212b) are connected to the two axial ends of the cylinder 211 and block the two openings 211b, respectively. The cylinder 211 and the two blocking members (212a, 212b) together form the valve cavity 211a, to seal the piston assembly 220 within the valve cavity 211a.

The shape of the cylinder 211 may be cylindrical, conical, pyramidal, etc., which is not limited in the present disclosure.

In another embodiment, the valve seat 210 may include a cylinder 211 and one blocking member. An interior of the cylinder 211 defines a cavity 211c, and one axial end of the cylinder 211 is provided with an opening 211b in communication with the cavity 211c. The blocking member is connected to one axial end of the cylinder 211 and blocks the opening 211b. The cylinder 211 and the blocking member together form the valve cavity 211a.

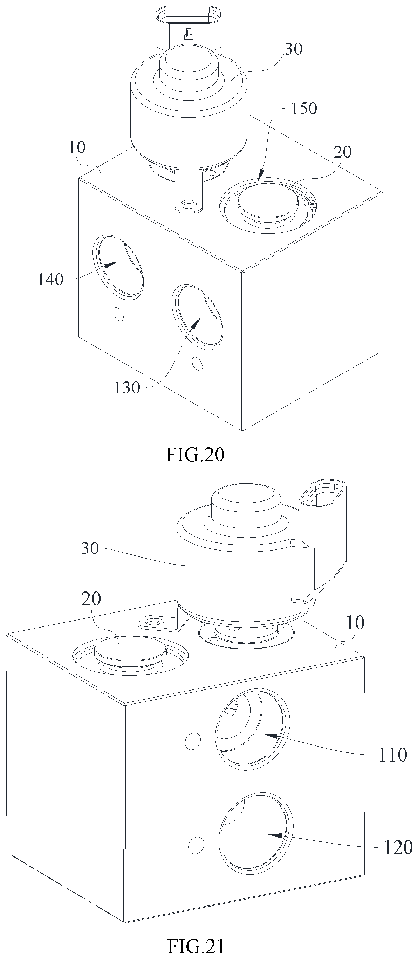

It should be noted that, as shown in FIG. 20, the switching valve 20 of embodiments of the present disclosure may be mounted in a mounting seat 10 for use. Specifically, the mounting seat 10 has a mounting chamber 150 and flow channels (110, 120, 130, 140), and the valve seat 210 of the switching valve 20 is fixedly mounted in the mounting chamber 150. When the piston assembly 210 is driven to move by fluid pressure, the flow channels (110, 120, 130, 140) of the mounting seat 10 may be switched.

The switching valve 20 will be explained in detail below by way of an example where the valve seat 210 includes the cylinder 211 and two blocking members (212a, 212b).

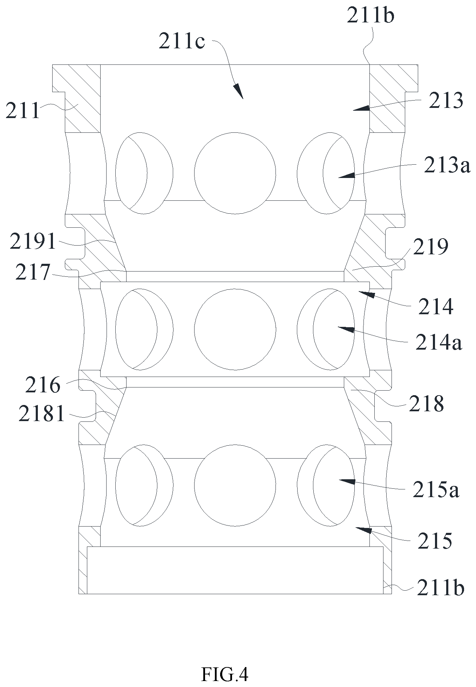

As shown in FIG. 4, the valve cavity 211a has a first sub-cavity 213, a second sub-cavity 214, and a third sub-cavity 215 in a movement direction D of the piston assembly 220. The second sub-cavity 214 is between the first sub-cavity 213 and the second sub-cavity 214. In embodiments of the present disclosure, the cavity 211c of the cylinder 211 is divided into the first sub-cavity 213, the second sub-cavity 214, and the third sub-cavity 215 in an axial direction of the cylinder 211. The movement direction D of the piston assembly 220 is parallel to the axial direction of the cylinder 211.

In embodiments of the present disclosure, the first sub-cavity 213 corresponds to a first communication channel 152 in position, the second sub-cavity 214 corresponds to a second communication channel 153 in position, and the third sub-cavity 215 corresponds to a third communication channel 154 in position.

The valve cavity 211a is further provided with a first valve port 216 for connecting the second sub-cavity 214 and the third sub-cavity 215, and a second valve port 217 for connecting the first sub-cavity 213 and the second sub-cavity 214.

The valve seat 210 further has a first through hole 213a, a second through hole 214a, and a third through hole 215a. The first through hole 213a is in communication with the first sub-cavity 213, the second through hole 214a is in communication with the second sub-cavity 214, and the third through hole 215a is in communication with the third sub-cavity 215. In embodiments of the present disclosure, the cylinder 211 is provided with the first through hole 213a, the second through hole 214a, and the third through hole 215a; the first through hole 213a, the second through hole 214a, and the third through hole 215a are arranged in sequence along the axial direction of the cylinder 211. The first through hole 213a, the second through hole 214a, and the third through hole 215a penetrate an inner wall surface and an outer wall surface of the cylinder 211. The inner wall surface of the cylinder 211 refers to a side surface facing the cavity 211c, and the outer wall surface of the cylinder 211 refers to a side surface facing away from the cavity 211c.

The first sub-cavity 213 is in communication with the first communication channel 152 by the first through hole 213a, the second sub-cavity 214 is in communication with the second communication channel 153 by the second through hole 214a, and the third sub-cavity 215 is in communication with the third communication channel 154 by the third through hole 215a.

It can be understood that the number of each of the first through hole 213a, the second through hole 214a, and the third through hole 215a may be one or more. When there are a plurality of first through holes 213a, a plurality of second through holes 214a, and a plurality of third through holes 215a, the plurality of first through holes 213a are arranged along a circumferential direction of the cylinder 211, the plurality of second through holes 214a are arranged along the circumferential direction of the cylinder 211, and the plurality of third through holes 215a are arranged along the circumferential direction of the cylinder 211.

Further, the plurality of first through holes 213a, the plurality of second through holes 214a, and the plurality of third through holes 215a may be equal in number; and along the axial direction of the cylinder 211, positions of the plurality of first through holes 213a, the plurality of second through holes 214a, and the plurality of third through holes 215a correspond to one another, but are not limited thereto. For example, the positions of the first through holes 213a, the second through holes 214a, and the third through holes 215a may be staggered in the axial direction of the cylinder 211.

The first through hole 213a may be provided in one of the blocking members 212b. The third through hole 215a may be provided in the other of the blocking members 212a.

Still referring to FIG. 4, the inner wall surface of the cylinder 211 is further provided with a first annular protrusion 218 and a second annular protrusion 219, which are spaced apart along the axial direction of the cylinder 211. The first annular protrusion 218 is located between the second sub-cavity 214 and the third sub-cavity 215 and configured to separate the second sub-cavity 214 from the third sub-cavity 215. The second annular protrusion 219 is located between the first sub-cavity 213 and the second sub-cavity 214 and configured to separate the first sub-cavity 213 from the second sub-cavity 214.

The first annular protrusion 218 has a first annular conical surface 2181 that forms an angle with an axis of the cylinder 211. The axis of the cylinder 211 may serve as an axis of the first annular conical surface 2181. The first annular conical surface 2181 defines the first valve port 216. When the piston assembly 220 is in a first position, the first annular conical surface 2181 is in sealing contact with the piston assembly 220.

The second annular protrusion 219 has a second annular conical surface 2191 that forms an angle with the axis of the cylinder 211. The axis of the cylinder 211 may serve as an axis of the second annular conical surface 2191. The second annular conical surface 2191 defines the second valve port 217. When the piston assembly 220 is in a second position, the second annular conical surface 2191 is in sealing contact with the piston assembly 220.

When the piston assembly 220 is in the first position, the piston assembly 220 closes the first valve port 216 and opens the second valve port 217; when the piston assembly 220 is in the second position, the piston assembly 220 closes the second valve port 217 and opens the first valve port 216.

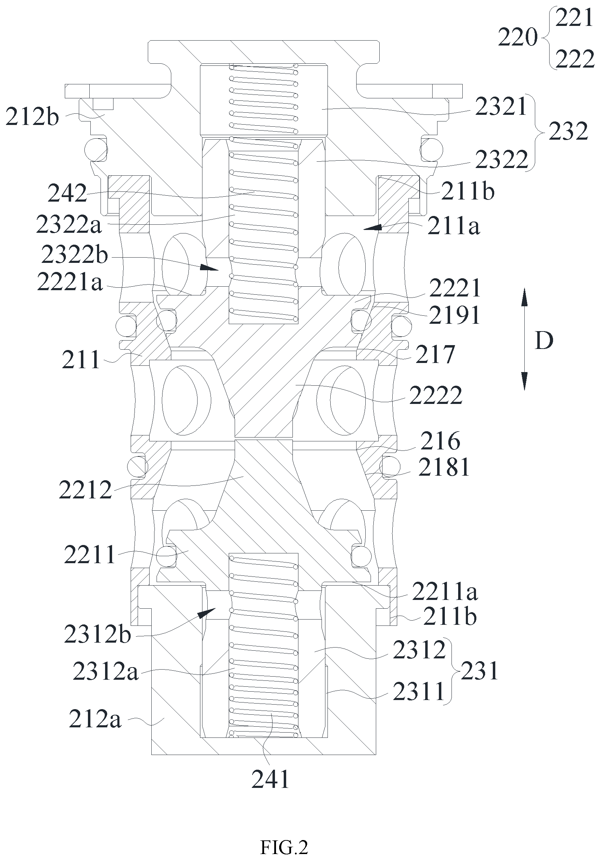

Referring back to FIG. 2, when the piston assembly 220 is in the second position, the piston assembly 220 closes the second valve port 217 and opens the first valve port 216, in which case the second through hole 214a is in communication with the third through hole 215a by the first valve port 216. If the piston assembly 220 moves upward and reaches the first position, the piston assembly 220 closes the first valve port 216 and opens the second valve port 217, in which case the first through hole 213a is in communication with the second through hole 214a by the second valve port 217.

A force for driving the piston assembly 220 to move within the valve seat 210 is based on a difference among pressures exerted on the piston assembly 220 by fluids in the first sub-cavity 213, the second sub-cavity 214, and the third sub-cavity 215. Specifically, when the pressure exerted on the piston assembly 220 by the fluid in the first sub-cavity 213 is the highest, the fluid pressure may drive the piston assembly 220 to move towards the second position; when the pressure exerted on the piston assembly 220 by the fluid in the third sub-cavity 215 is the highest, the fluid pressure may drive the piston assembly 220 to move towards the first position.

Consequently, in the switching valve 20 of embodiments of the present disclosure, the piston assembly 220 is movable within the valve seat 210 under the drive of the fluid pressure, allowing communication between the first through hole 213a and the second through hole 214a or communication between the second through hole 214a and the third through hole 215a, thus achieving a flow path switching effect. Compared to valves that employ electromagnetic drive to achieve flow path switching in the related art, the switching valve 20 of embodiments of the present disclosure has advantages of a simpler structure and lower cost.

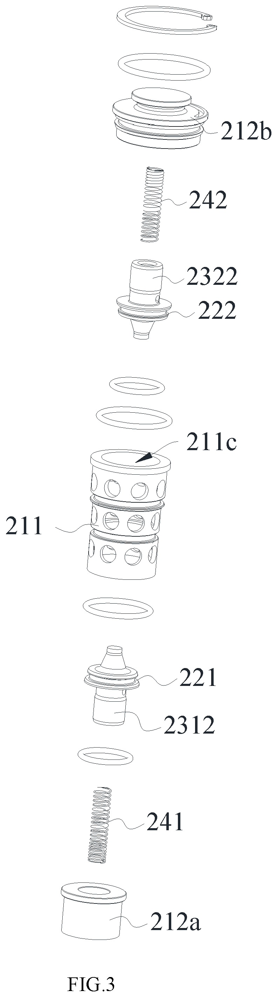

As shown in FIGS. 2 and 3, the switching valve 20 further includes two elastic members (241, 242) arranged within the valve cavity 211a, and each elastic member is connected to the piston assembly 220. One of the elastic members is configured to make the piston assembly 220 tend to move in a direction of closing the first valve port 216, and the other of the elastic members is configured to make the piston assembly 220 tend to move in a direction of closing the second valve port 217.

In embodiments of the present disclosure, under the action of elastic force provided by the two elastic members (241, 242), the piston assembly 220 is able to remain in a middle position between the first position and the second position when not subjected to fluid pressure, thereby neither closing the first valve port 216 nor closing the second valve port 217, and keeping both the first valve port 216 and the second valve port 217 in a semi-open state. In this way, when fluid is introduced, the piston assembly 220 can quickly move towards the first position or the second position, improving the response speed.

In one embodiment, the elastic members may be springs, rubber pads, or the like.

Still referring to FIGS. 2 and 3, the piston assembly 220 includes two movable members arranged along the movement direction D, and the two movable members (221, 222) are linked. In the first position, one of the movable members closes the first valve port 216; in the second position, the other of the movable members closes the second valve port 217.

The linkage between the two movable members (221, 222) may have various embodiments. For example, in one embodiment, the two movable members (221, 222) are of an integral structure; in another embodiment, the two movable members (221, 222) abut against each other under the action of the two elastic members; in yet another embodiment, the two movable members (221, 222) are connected by a linkage member (not shown in the drawings).

The switching valve 20 will be explained in detail below by way of an example where the two movable members (221, 222) abut against each other.

As shown in FIGS. 2 and 3, the two elastic members (241, 242) are located on two opposite sides of the two movable members (221, 222) facing away from each other along the movement direction D. Under the elastic force provided by the two elastic members (241, 242), the two movable members (221, 222) tend to keep abutment with each other.

For ease of explanation, the two movable members (221, 222) are defined as a first movable member 221 and a second movable member 222, the two elastic members (241, 242) are defined as a first elastic member 241 and a second elastic member 242, and the two blocking members (212a, 212b) are defined as a first blocking member 212a and a second blocking member 212b.

The first movable member 221 includes a first closing portion 2211 and a first extension portion 2212, and the second movable member 222 includes a second closing portion 2221 and a second extension portion 2222. The first closing portion 2211 and the second closing portion 2221 are arranged opposite each other along the movement direction D. The first closing portion 2211 is configured to close the first valve port 216, and the second closing portion 2221 is configured to close the second valve port 217. The first extension portion 2212 is disposed on and protrudes from a surface of the first closing portion 2211 facing the second closing portion 2221, and the second extension portion 2222 is disposed on and protrudes from a surface of the second closing portion 2221 facing the first closing portion 2211. The first extension portion 2212 and the second extension portion 2222 abut against each other.

An outer peripheral surface of the first closing portion 2211 is adapted to the shape of the first annular conical surface 2181, to ensure a sealing fit between the first closing portion 2211 and the first annular conical surface 2181. An outer peripheral surface of the second closing portion 2221 is adapted to the shape of the second annular conical surface 2191, to ensure a sealing fit between the second closing portion 2221 and the second annular conical surface 2191.

Moreover, in embodiments of the present disclosure, a third sealing member 173 is provided between the outer peripheral surface of the second blocking member 212b and an inner wall surface of a first mounting channel 151, and a fourth sealing member 174 and a fifth sealing member 175 are provided between an outer peripheral surface of the cylinder 211 and the inner wall surface of the first mounting channel 151.

As shown in FIG. 2, the piston assembly 220 is movably connected to the valve seat 210 through a guide structure. The guide structure is configured to guide movement of the piston assembly 220 along the movement direction D. By providing the guide structure, the consistency of reciprocating movement of the piston assembly 220 between the first position and the second position can be improved, and sealing performance of the piston assembly 220 when closing the first valve port 216 or the second valve port 217 can be enhanced.

In embodiments of the present disclosure, the two movable members are connected to the two blocking members of the valve seat 210 by two guide structures, respectively. For ease of explanation, the guide structure corresponding to the first movable member 221 is defined as a first guide structure 231, and the guide structure corresponding to the second movable member 222 is defined as a second guide structure 232. That is, the first movable member 221 is movably connected to the first blocking member 212a through the first guide structure 231, and the second movable member 222 is movably connected to the second blocking member 212b through the second guide structure 232.

The first guide structure 231 includes a first guide groove 2311 and a first guide column 2312. The first guide groove 2311 is provided on one of the first blocking member 212a and the first movable member 221, and the first guide column 2312 is provided on the other of the first blocking member 212a and the first movable member 221. The first guide column 2312 is inserted into the first guide groove 2311, and the first guide column 2312 is in a guiding fit with the first guide groove 2311 along the movement direction D.

In embodiments of the present disclosure, the first guide column 2312 is provided on and protrudes from a side surface of the first closing portion 2211 of the first movable member 221 facing away from the second movable member 222, and the first guide groove 2311 is provided on the first blocking member 212a at a position corresponding to the first guide column 2312. Certainly, in another embodiment, the first guide column 2312 may be provided on the first blocking member 212a, while the first guide groove 2311 may be provided on the first closing portion 2211.

The second guide structure 232 includes a second guide groove 2321 and a second guide column 2322. The second guide groove 2321 is provided on one of the second blocking member 212b and the second movable member 222, and the second guide column 2322 is provided on the other of the second blocking member 212b and the second movable member 222. The second guide column 2322 is inserted into the second guide groove 2321, and the second guide column 2322 is in a guiding fit with the second guide groove 2321 along the movement direction D.

In embodiments of the present disclosure, the second guide column 2322 is provided on and protrudes from a side surface of the second closing portion 2221 of the second movable member 222 facing away from the first movable member 221, and the second guide groove 2321 is provided on the second blocking member 212b at a position corresponding to the second guide column 2322. Certainly, in another embodiment, the second guide column 2322 may be provided on the second blocking member 212b, while the second guide groove 2321 may be provided on the second closing portion 2221.

The first guide column 2312 is provided with a first receiving groove 2312a with an opening facing a bottom surface of the first guide groove 2311. The first elastic member 241 is accommodated in the first receiving groove 2312a, and two ends of the first elastic member 241 abut against the bottom surface of the first guide groove 2311 and a bottom surface of the first receiving groove 2312a, respectively. The first elastic member 241 is configured to apply elastic force to the first movable member 221 to move it towards the second movable member 222.

In one embodiment, the first receiving groove 2312a extends into the first closing portion 2211.

The first guide column 2312 is further provided with a first perforation 2312b that penetrates an inner wall of the first receiving groove 2312a and an outer peripheral surface of the first guide column 2312. The first receiving groove 2312a is in communication with the third sub-cavity 215 through the first perforation 2312b. The fluid in the third sub-cavity 215 may enter the first receiving groove 2312a through the first perforation 2312b, thereby pressing against the bottom surface of the first receiving groove 2312a to cause the first movable member 221 to move in a direction of closing the first valve port 216.

The second guide column 2322 is provided with a second receiving groove 2322a with an opening facing a bottom surface of the second guide groove 2321. The second elastic member 242 is accommodated in the second receiving groove 2322a, and two ends of the second elastic member 242 abut against the bottom surface of the second guide groove 2321 and a bottom surface of the second receiving groove 2322a, respectively. The second elastic member 242 is configured to apply elastic force to the second movable member 222 to move it towards the first movable member 221.

In one embodiment, the second receiving groove 2322a extends into the second closing portion 2221.

The second guide column 2322 is further provided with a second perforation 2322b that penetrates an inner wall of the second receiving groove 2322a and an outer peripheral surface of the second guide column 2322. The second receiving groove 2322a is in communication with the first sub-cavity 213 through the second perforation 2322b. The fluid in the first sub-cavity 213 may enter the second receiving groove 2322a through the second perforation 2322b, thereby pressing against the bottom surface of the second receiving groove 2322a to cause the second movable member 222 to move in a direction of closing the second valve port 217.

Still referring to FIG. 2, a side of the first closing portion 2211 facing away from the second closing portion 2221 has a first pressure-receiving surface 2211a, and a side of the second closing portion 2221 facing away from the first closing portion 2211 has a second pressure-receiving surface 2221a. In the first position, there is always a first gap between the second pressure-receiving surface 2221a and an inner wall surface of the valve cavity 211a. In the second position, there is always a second gap between the first pressure-receiving surface 2211a and the inner wall surface of the valve cavity 211a. The fluid in the third sub-cavity 215 may press against the first pressure-receiving surface 2211a through the first gap, causing the first movable member 221 to move in the direction of closing the first valve port 216. The fluid in the first sub-cavity 213 may press against the second pressure-receiving surface 2221a through the second gap, causing the second movable member 222 to move in the direction of closing the second valve port 217.

In embodiments of the present disclosure, a part of the side surface of the first closing portion 2211 facing away from the second closing portion 2221, which is not covered by the first guide column 2312, constitutes the first pressure-receiving surface 2211a; in the second position, there is a gap between the first pressure-receiving surface 2211a and the first blocking member 212a. A part of the side surface of the second closing portion 2221 facing away from the first closing portion 2211, which is not covered by the second guide column 2322, constitutes the second pressure-receiving surface 2221a; in the first position, there is a gap between the second pressure-receiving surface 2221a and the second blocking member 212b.

It can be understood that when the piston assembly 220 is in an extreme position (the first position or the second position), there is a gap between the first closing portion 2211 or the second closing portion 2221 and the inner wall surface of the valve cavity 211a, so that the first pressure-receiving surface 2211a or the second pressure-receiving surface 2221a will not tightly abut against the inner wall surface of the valve cavity 211a, which is easier for the fluid to push the piston assembly 220 to move, thereby switching the flow path.

It should be noted that in embodiments of the present disclosure, the first movable member 221 and the second movable member 222 are linked, that is, when one of the first movable member 221 and the second movable member 222 moves, the other thereof will also move accordingly.

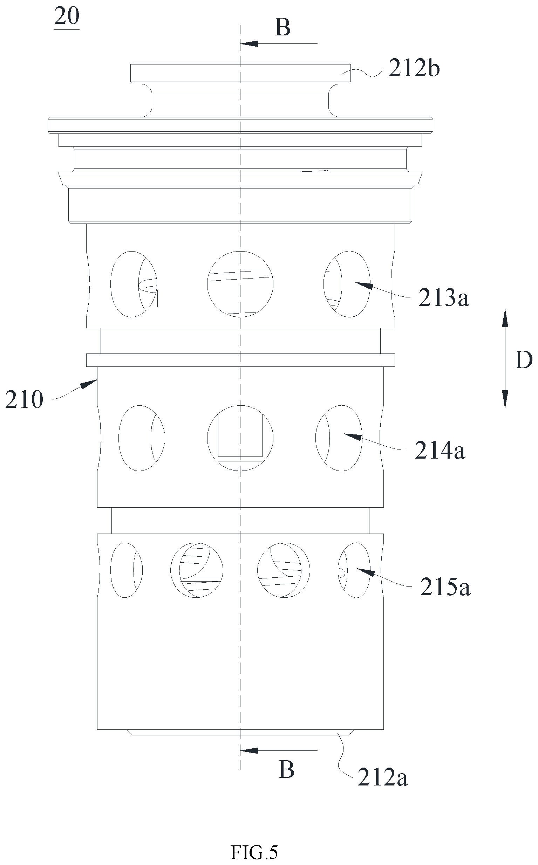

As shown in FIGS. 5 to 8, similarities between a switching valve 20 of a second embodiment of the present disclosure and the switching valve 20 of the first embodiment will not be repeated, and differences are as follows.

The cylinder 211 has a first inner ring surface 215b and a second inner ring surface 213b. The first inner ring surface 215b surrounds the third sub-cavity 215, and the second inner ring surface 213b surrounds the first sub-cavity 213. An outer periphery of the first closing portion 2211 of the first movable member 221 has a first outer ring surface 2211b, and the first outer ring surface 2211b is in a guiding fit with the first inner ring surface 215b. An outer periphery of the second closing portion 2221 of the second movable member 222 has a second outer ring surface 2221b, and the second outer ring surface 2221b is in a guiding fit with the second inner ring surface 213b.

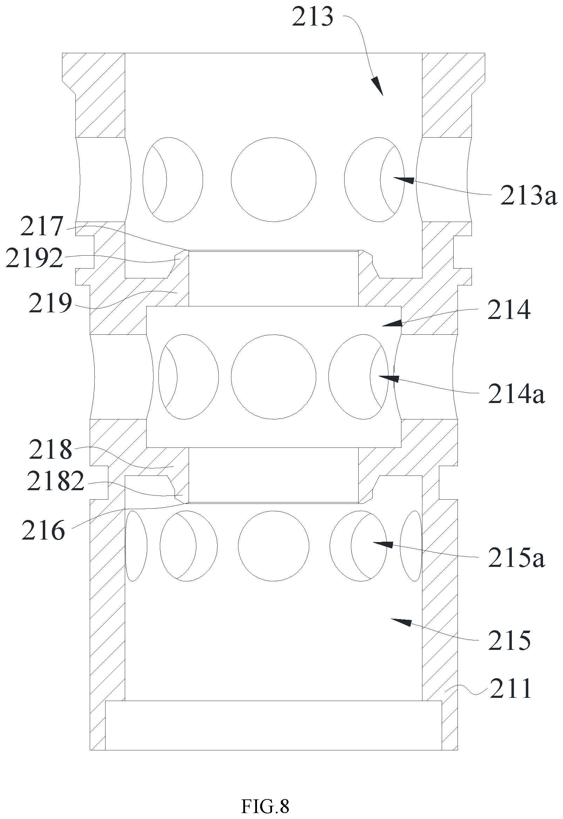

As shown in FIG. 8, the first annular protrusion 218 has a first annular tip 2182, and the first annular tip 2182 defines the first valve port 216. The second annular protrusion 219 has a second annular tip 2192, and the second annular tip 2192 defines the second valve port 217.

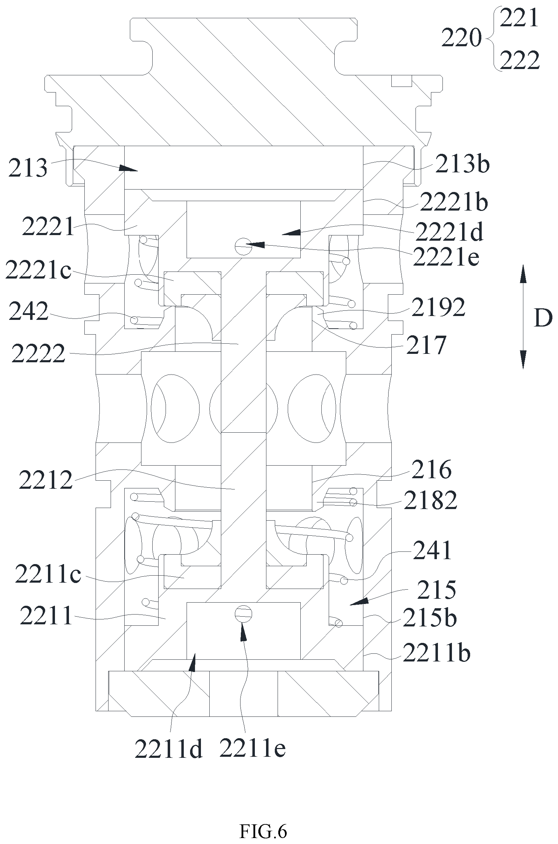

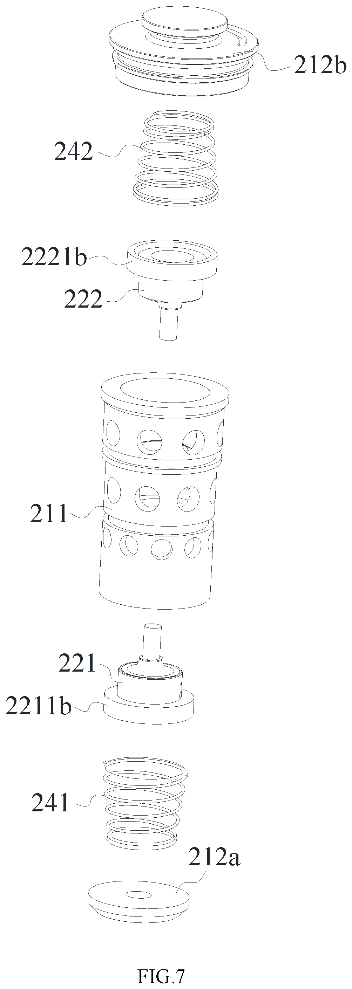

As shown in FIGS. 6 and 7, a first sealing gasket 2211c is provided on a side of the first closing portion 2211 of the first movable member 221 facing the first annular tip 2182, and a second sealing gasket 2221c is provided on a side of the second closing portion 2221 of the second movable member 222 facing the second annular tip 2192. In the first position, the first sealing gasket 2211c abuts against the first annular tip 2182 and closes the first valve port 216; In the second position, the second sealing gasket 2221c abuts against the second annular tip 2192 and closes the second valve port 217.

As shown in FIG. 6, two sides of the two movable members (221, 222), which face away from each other along the movement direction D, are provided with grooves, and the two grooves (2211d, 2221d) are in communication with the first sub-cavity 213 and the third sub-cavity 215, respectively. The two grooves (2211d, 2221d) are defined as a first groove 2211d and a second groove 2221d.

In embodiments of the present disclosure, the first closing portion 2211 of the first movable member 221 is provided with the first groove 2211d on the side facing away from the second movable member 222, a groove wall of the first groove 2211d is provided with a third perforation 2211e, and the first groove 2211d is in communication with the third sub-cavity 215 through the third perforation 2211e. The second closing portion 2221 of the second movable member 222 is provided with the second groove 2221d on the side facing away from the first movable member 221, a groove wall of the second groove 2221d is provided with a fourth perforation 2221e, and the second groove 2221d is in communication with the first sub-cavity 213 through the fourth perforation 2221e.

It can be understood that fluid may enter the first groove 2211d and the second groove 2221d, making it easier for the fluid to push the piston assembly 220 to move.

Still referring to FIG. 6, the two ends of the first elastic member 241 abut against the first annular protrusion 218 and the first movable member 221 respectively, to apply elastic force to the first movable member 221 in a direction away from the second movable member 222. The two ends of the second elastic member 242 abut against the second annular protrusion 219 and the second movable member 222 respectively, to apply elastic force to the second movable member 222 in a direction away from the first movable member 221.

In one embodiment, the first elastic member 241 and the second elastic member 242 are both springs. An end of the first elastic member 241 close to the second movable member 222 is fitted over an outer periphery of the first annular tip 2182, and the first extension portion 2212 is inserted through the first elastic member 241. An end of the second elastic member 242 close to the first movable member 221 is fitted over an outer periphery of the second annular tip 2192, and the second extension portion 2222 is inserted through the second elastic member 242.

It should be noted that in embodiments of the present disclosure, when the piston assembly 220 is driven by fluid pressure, the first movable member 221 and the second movable member 222 are linked; when the piston assembly 220 is in a free state (i.e., not driven by fluid pressure), the first movable member 221 and the second movable member 222 do not abut against each other.

Specifically, when no fluid is introduced into the valve cavity 211a of the switching valve 20, the first movable member 221 abuts against the first blocking member 212a under the elastic force of the first elastic member 241, and does not close the first valve port 216; the second movable member 222 abuts against the second blocking member 212b under the elastic force of the second elastic member 242, and does not close the second valve port 217. At this point, the first movable member 221 and the second movable member 222 do not abut against each other, and there is a gap between the first extension portion 2212 and the second extension portion 2222, the gap being configured to provide space for movement of one of the first movable member 221 and the second movable member 222.

When fluid is introduced into the valve cavity 211a of the switching valve 20 and the fluid pressure in the third sub-cavity 215 is the highest, the fluid pressure overcomes the elastic force of the first elastic member 241 and pushes the first movable member 221 to move towards the first position until the first movable member 221 closes the first valve port 216; at this point, the first movable member 221 abuts against the second movable member 222. During the movement of the first movable member 221 towards the first position, the second movable member 222 does not move and remains in a state of opening the second valve port 217. Moreover, when the first movable member 221 moves to the first position, the first movable member 221 abuts against the second movable member 222, and to some extent, the first movable member 221 can block the second movable member 222 from moving in the direction of closing the second valve port 217. When the fluid pressure in the first sub-cavity 213 is the highest, the fluid pressure overcomes the elastic force of the second elastic member 242 and pushes the second movable member 222 to move towards the second position until the second movable member 222 closes the second valve port 217; at this point, the second movable member 222 abuts against the first movable member 221. During the movement of the second movable member 222 towards the second position, the first movable member 221 does not move and remains in a state of opening the first valve port 216. Moreover, when the second movable member 222 moves to the second position, the second movable member 222 abuts against the first movable member 221, and to some extent, the second movable member 222 can block the first movable member 221 from moving in the direction of closing the first valve port 216.

Therefore, when the piston assembly 220 of the switching valve 20 of the second embodiment of the present disclosure is in the extreme position (the first position or the second position), the first movable member 221 and the second movable member 222 abut against each other, so that the movable member corresponding to the valve port in an open state may be subjected to an abutting force of the other movable member, and the abutting force can, to some extent, prevent the two valve ports from being both closed due to other reasons.

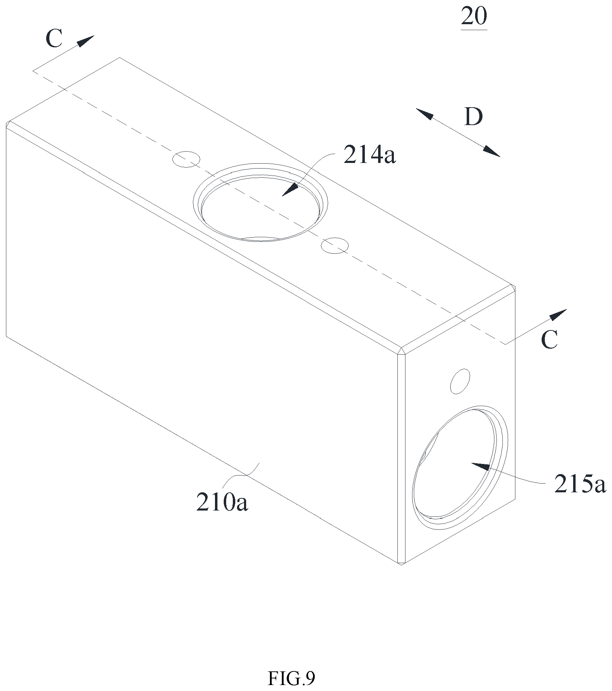

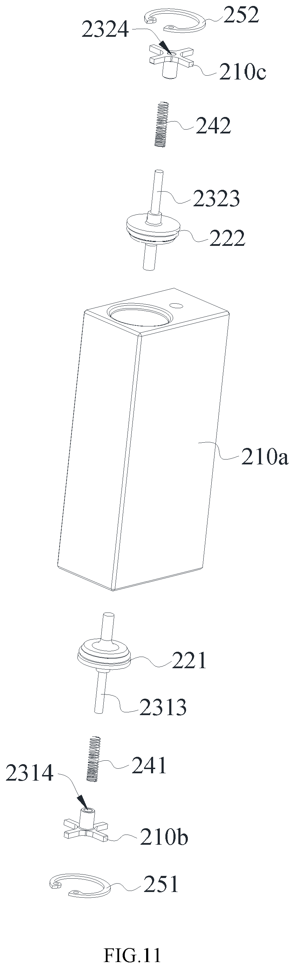

As shown in FIGS. 9 to 12, similarities between a switching valve 20 of a third embodiment of the present disclosure and the switching valve 20 of the first embodiment will not be repeated, and differences are as follows.

The valve seat 210 includes a seat body 210a and two stop members (210b, 210c). The seat body 210a has the first sub-cavity 213, the second sub-cavity 214, and the third sub-cavity 215. The seat body 210a is further provided with the first through hole 213a and the third through hole 215a on both sides of the seat body 210a along the movement direction D. The first through hole 213a and the third through hole 215a are arranged opposite each other along the movement direction D. The first through hole 213a is in communication with the first sub-cavity 213, and the third through hole 215a is in communication with the third sub-cavity 215. The seat body 210a further has the second through hole 214a that is in communication with the second sub-cavity 214. The two stop members (210b, 210c) are respectively confined within the first through hole 213a and the third through hole 215a, and the two movable members (221, 222) are located between the two stop members (210b, 210c); each movable member is movably connected to the stop member through one guide structure.

For ease of explanation, the two stop members (210b, 210c) are defined as a first stop member 210b and a second stop member 210c. The first stop member 210b corresponds to the first movable member 221, and the second stop member 210c corresponds to the second movable member 222.

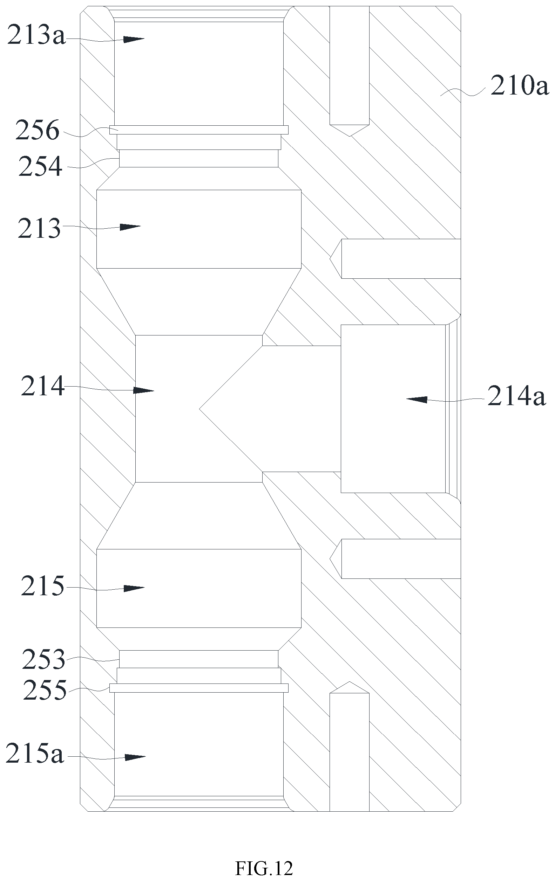

As shown in FIG. 12, a hole wall of the third through hole 215a is provided with a first step structure 253 and a first retaining groove 255, and a hole wall of the first through hole 213a is provided with a second step structure 254 and a second retaining groove 256.

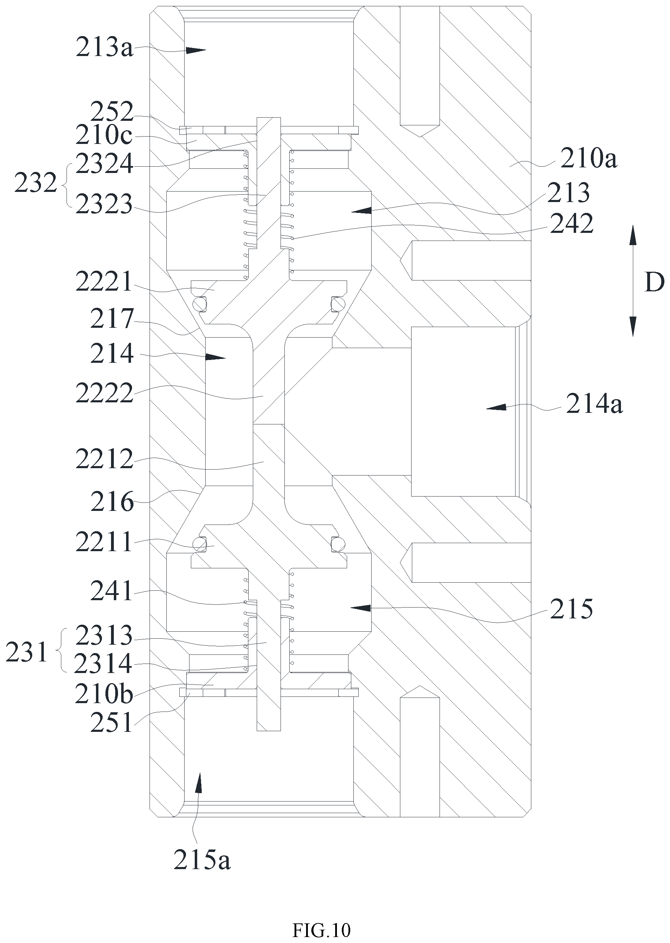

As shown in FIGS. 10 and 12, the switching valve 20 further includes a first retaining spring 251 and a second retaining spring 252. The first stop member 210b is disposed in the third through hole 215a and abuts against the first step structure 253. The first retaining spring 251 is engaged in the first retaining groove 255, and the first retaining spring 251 and the first step structure 253 jointly secure the first stop member 210b. The second stop member 210c is disposed in the first through hole 213a and abuts against the second step structure 254. The second retaining spring 252 is engaged in the second retaining groove 256, and the second retaining spring 252 and the second step structure 254 jointly secure the second stop member 210c.

The first movable member 221 is movably connected to the first stop member 210b through the first guide structure 231, and the second movable member 222 is movably connected to the second stop member 210c through the second guide structure 232.

The first guide structure 231 includes a first guide rod 2313 and a first guide hole 2314. The first guide rod 2313 is provided on one of the first movable member 221 and the first stop member 210b, while the first guide hole 2314 is provided on the other of the first movable member 221 and the first stop member 210b. The first guide rod 2313 is inserted through the first guide hole 2314, and the first guide rod 2313 is in a guiding fit with the first guide hole 2314 in the movement direction D.

In embodiments of the present disclosure, the first guide rod 2313 is provided on a side of the first closing portion 2211 of the first movable member 221 facing away from the second movable member 222, and the first guide hole 2314 is provided on the first stop member 210b. Certainly, in another embodiment, the first guide rod 2313 may be provided on the first stop member 210b, and the first guide hole 2314 may be provided on the first movable member 221.

The second guide structure 232 includes a second guide rod 2323 and a second guide hole 2324. The second guide rod 2323 is provided on one of the second movable member 222 and the second stop member 210c, and the second guide hole 2324 is provided on the other of the second movable member 222 and the second stop member 210c. The second guide rod 2323 is inserted through the second guide hole 2324, and the second guide rod 2323 is in a guiding fit with the second guide hole 2324 in the movement direction D.

In embodiments of the present disclosure, the second guide rod 2323 is provided on a side of the second closing portion 2221 of the second movable member 222 facing away from the first movable member 221, and the second guide hole 2324 is provided on the second stop member 210c. Certainly, in another embodiment, the second guide rod 2323 may be provided on the second stop member 210c, and the second guide hole 2324 may be provided on the second movable member 222.

The first elastic member 241 is fitted over an outer periphery of the first guide rod 2313, and the two ends of the first elastic member 241 abut against the first stop member 210b and the first closing portion 2211 of the first movable member 221, respectively. The first elastic member 241 is configured to apply elastic force to the first movable member 221 to move it towards the second movable member 222.

The second elastic member 242 is fitted over an outer periphery of the second guide rod 2323, and the two ends of the second elastic member 242 abut against the second stop member 210c and the second closing portion 2221 of the second movable member 222, respectively. The second elastic member 242 is configured to apply elastic force to the second movable member 222 to move it towards the first movable member 221.

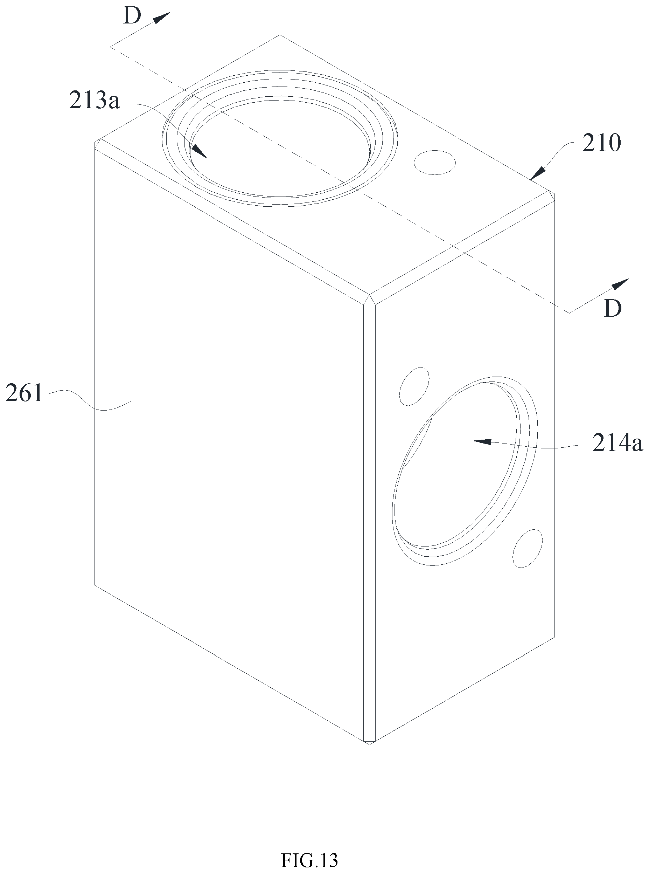

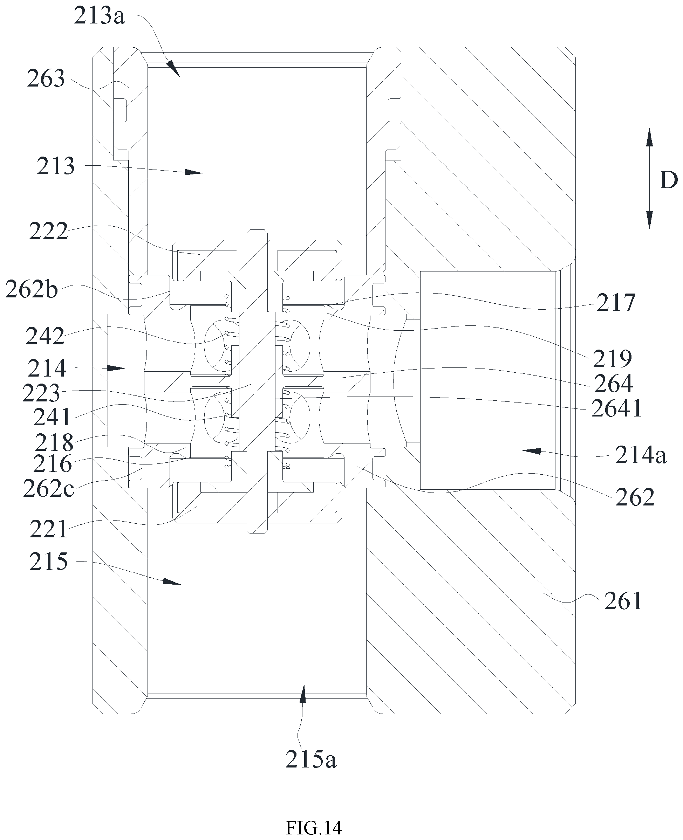

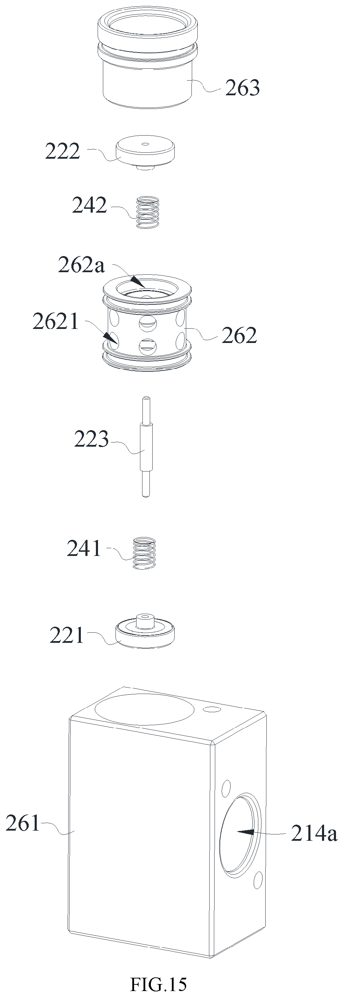

As shown in FIGS. 13 to 15, similarities between a switching valve 20 of a fourth embodiment of the present disclosure and the switching valve 20 of the second embodiment will not be repeated, and differences are as follows.

The valve seat 210 includes a valve body 261, a valve core 262, and a limiting member 263. The valve body 261 has the first sub-cavity 213, the second sub-cavity 214, and the third sub-cavity 215. The valve core 262 is disposed within the second sub-cavity 214. The limiting member 263 is disposed within the first sub-cavity 213 and is configured to limit the valve core 262 in the second sub-cavity 214. In embodiments of the present disclosure, the limiting member 263 has a cylindrical structure, but is not limited thereto. The valve body 261 is further provided with the first through hole 213a, the second through hole 214a, and the third through hole 215a. The first through hole 213a is in communication with the first sub-cavity 213, the second through hole 214a is in communication with the second sub-cavity 214, and the third through hole 215a is in communication with the third sub-cavity 215.

The valve core 262 is a sleeve with openings at both axial ends and has an inner cavity 262a. The valve core 262 has an inner surface 262b and an outer surface 262c, with the inner surface 262b facing the inner cavity 262a and the outer surface 262c facing away from the inner cavity 262a. The first annular protrusion 218 and the second annular protrusion 219 are both disposed on and protrude from the inner surface 262b of the valve core 262, and are spaced apart from each other along the movement direction D. The first annular protrusion 218 defines the first valve port 216, and the second annular protrusion 219 defines the second valve port 217.

The valve core 262 is further provided with a through bore 2621 that penetrates the inner surface 262b and the outer surface 262c of the valve core 262. The inner cavity 262a of the valve core 262 is in communication with the second sub-cavity 214 via the through bore 2621. The valve core 262 is internally provided with a middle portion 264, and the middle portion 264 is connected to the inner surface 262b of the valve core 262 and located between the first annular protrusion 218 and the second annular protrusion 219. The middle portion 264 is provided with a guiding hole 2641 that penetrates the middle portion 264 along the movement direction D.

The piston assembly 220 includes the first movable member 221, the second movable member 222, and a connecting rod 223. The connecting rod 223 is inserted through the guiding hole 2641 of the middle portion 264, and two axial ends of the connecting rod 223 are respectively connected to the first movable member 221 and the second movable member 222, so that when the piston assembly 220 is driven by fluid pressure, the first movable member 221, the second movable member 222, and the connecting rod 223 can move together.

The first elastic member 241 is fitted over an outer periphery of the connecting rod 223, and the two ends of the first elastic member 241 abut against the first movable member 221 and a side surface of the middle portion 264 facing the first movable member 221, respectively. The second elastic member 242 is fitted over the outer periphery of the connecting rod 223, and the two ends of the second elastic member 242 abut against the second movable member 222 and a side surface of the middle portion 264 facing the second movable member 222, respectively.

In one embodiment, in the free state, the inner surface 262b of the valve core 262 surrounds an outer peripheral surface of the first movable member 221, and there is a small gap between the outer peripheral surface of the first movable member 221 and the inner surface 262b of the valve core 262. In the free state, the inner surface 262b of the valve core 262 surrounds an outer peripheral surface of the second movable member 222, and there is a small gap between the outer peripheral surface of the second movable member 222 and the inner surface 262b of the valve core 262.

It should be noted that a magnitude of driving force exerted by a fluid on an object depends on a product of a pressure intensity difference flowing across the object and a force-bearing area of the object. For the first movable member 221, due to the small gap between the outer peripheral surface of the first movable member 221 and the inner surface 262b of the valve core 262, when the fluid passes through this gap, the pressure intensity difference of the fluid is the greatest at this gap, and meanwhile the area of the first movable member 221 is subjected to fluid impact force is also the greatest. Consequently, the driving force exerted by the fluid on the first movable member 221 can be maximized, thereby enhancing an operational capability of the first movable member 221.

Similarly, the driving force exerted by the fluid on the second movable member 222 is significantly increased, thereby enhancing an operational capability of the second movable member 222.

Therefore, by designing the small gap between the outer peripheral surface of the first movable member 221 and the inner surface 262b of the valve core 262, and by designing the small gap between the outer peripheral surface of the second movable member 222 and the inner surface 262b of the valve core 262, the operational capability of the piston assembly 220 can be improved, thereby reducing the pressure differential driving force required for the movement of the piston assembly 220.

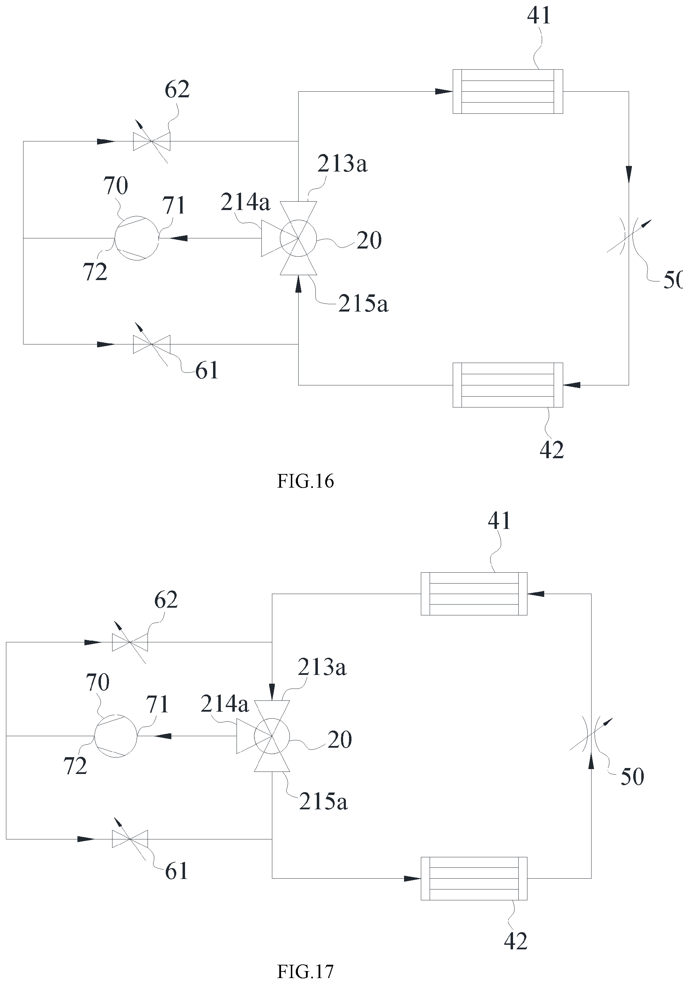

As shown in FIGS. 16 and 17, a refrigeration system of a first embodiment of the present disclosure includes the switching valve 20 of any of the above embodiments, an outdoor heat exchanger 41, an indoor heat exchanger 42, an expansion valve 50, and a device 70.

As the refrigeration system of the present disclosure includes the switching valve 20 of any of the above embodiments, the refrigeration system has all the advantages and beneficial effects of any of the above embodiments, which will not be repeated here.

The device 70 has a fluid outlet 72 and a fluid inlet 71, a pressure of a fluid flowing out of the device 70 from the fluid outlet 72 being greater than a pressure of a fluid flowing into the device 70 from the fluid inlet 71. The device 70 has a first working condition and a second working condition. In embodiments of the present disclosure, the first working condition is a cooling mode, and the second working condition is a heating mode.

The fluid inlet 71 of the device 70 is in communication with the second through hole 214a of the switching valve 20.

In the first working condition, the fluid outlet 72 of the device 70 is in communication with the first through hole 213a of the switching valve 20, or the fluid outlet 72 is simultaneously in communication with both the first through hole 213a and the third through hole 215a. The piston assembly 220 of the switching valve 20 is driven by a fluid pressure difference to cause the switching valve 20 to switch so that the second through hole 214a is in communication with the third through hole 215a.

Specifically, when the fluid outlet 72 is in communication with the first through hole 213a of the switching valve 20, a pressure difference between the fluid pressure in the first through hole 213a and the fluid pressure in the second through hole 214a causes the switching valve 20 to switch so that the third through hole 215a is in communication with the second through hole 214a. When the fluid outlet 72 is simultaneously in communication with both the first through hole 213a and the third through hole 215a, there is a first pressure difference between the fluid pressure in the first through hole 213a and the fluid pressure in the second through hole 214a, and a second pressure difference between the fluid pressure in the second through hole 214a and the fluid pressure in the third through hole 215a. A pressure difference between the first pressure difference and the second pressure difference causes the switching valve 20 to switch so that the third through hole 215a is in communication with the second through hole 214a.

For the situation where there is the pressure difference between the first pressure difference and the second pressure difference, it may be achieved by differentiating force-bearing areas of the first movable member 221 and the second movable member 222.

In the second working condition, the fluid outlet 72 of the device 70 is in communication with the third through hole 215a of the switching valve 20, or the fluid outlet 72 is simultaneously in communication with both the first through hole 213a and the third through hole 215a. The piston assembly 220 of the switching valve 20 is driven by the fluid pressure difference to cause the switching valve 20 to switch so that the first through hole 213a is in communication with the second through hole 214a.

Specifically, when the fluid outlet 72 is in communication with the third through hole 215a of the switching valve 20, a pressure difference between the fluid pressure in the second through hole 214a and the fluid pressure in the third through hole 215a causes the switching valve 20 to switch so that the first through hole 213a is in communication with the second through hole 214a. When the fluid outlet 72 is simultaneously in communication with both the first through hole 213a and the third through hole 215a, there is a third pressure difference between the fluid pressure in the first through hole 213a and the fluid pressure in the second through hole 214a, and a fourth pressure difference between the fluid pressure in the second through hole 214a and the fluid pressure in the third through hole 215a. A pressure difference between the third pressure difference and the fourth pressure difference causes the switching valve 20 to switch so that the first through hole 213a is in communication with the second through hole 214a.

For the situation where there is the pressure difference between the third pressure difference and the fourth pressure difference, it may be achieved by differentiating force-bearing areas of the first movable member 221 and the second movable member 222.

As shown in FIGS. 16 and 17, the refrigeration system further includes a first valve 61 and a second valve 62. The fluid outlet 72 of the device 70 is in communication with the third through hole 215a of the switching valve 20 through the first valve 61, and the fluid outlet 72 of the device 70 is in communication with the first through hole 213a of the switching valve 20 through the second valve 62.

The switching valve 20, the outdoor heat exchanger 41, the expansion valve 50, and the indoor heat exchanger 42 form a circulation flow path through pipelines. The first through hole 213a of the switching valve 20 is in communication with the outdoor heat exchanger 41, and the third through hole 215a of the switching valve 20 is in communication with the indoor heat exchanger 42.

In one embodiment, the first valve 61 and the second valve 62 may be shut-off valves, solenoid valves, or the like.

In one embodiment, the device 70 may be a compressor, but is not limited thereto.

As shown in FIG. 16, in the cooling mode (the device 70 is in the first working condition), the first valve 61 is closed and the second valve 62 is open. High-pressure fluid provided by the fluid outlet 72 of the device 70 only passes through the second valve 62 and does not pass through the first valve 61. After passing through the second valve 62, the high-pressure fluid is divided into two streams. A first stream of high-pressure fluid sequentially is converted into low-pressure fluid after passing sequentially through the outdoor heat exchanger 41, the expansion valve 50, and the indoor heat exchanger 42, and flows to the third through hole 215a of the switching valve 20. A second stream of high-pressure fluid flows to the first through hole 213a of the switching valve 20. The piston assembly 220 of the switching valve 20 moves to the second position under the action of the second stream of high-pressure fluid. In such a case, the second valve port 217 is closed, the first valve port 216 is opened, and the second through hole 214a is in communication with the third through hole 215a through the first valve port 216. Consequently, the low-pressure fluid converted from the first stream of high-pressure fluid returns to the fluid inlet 71 of the device 70 after passing through the third through hole 215a and the second through hole 214a of the switching valve 20.

As shown in FIG. 17, in the heating mode (the device 70 is in the second working condition), the first valve 61 is open and the second valve 62 is closed. High-pressure fluid provided by the fluid outlet 72 of the device 70 only passes through the first valve 61 and does not pass through the second valve 62. After passing through the first valve 61, the high-pressure fluid is divided into two streams. A first stream of high-pressure fluid is converted into low-pressure fluid after passing sequentially through the indoor heat exchanger 42, the expansion valve 50, and the outdoor heat exchanger 41, and flows to the first through hole 213a of the switching valve 20. A second stream of high-pressure fluid flows to the third through hole 215a of the switching valve 20. The piston assembly 220 of the switching valve 20 moves to the first position under the action of the second stream of high-pressure fluid. In such a case, the second valve port 217 is opened, the first valve port 216 is closed, and the first through hole 213a is in communication with the second through hole 214a through the second valve port 217. Consequently, the low-pressure fluid converted from the first stream of high-pressure fluid returns to the fluid inlet 71 of the device 70 after passing through the first through hole 213a and the second through hole 214a of the switching valve 20.

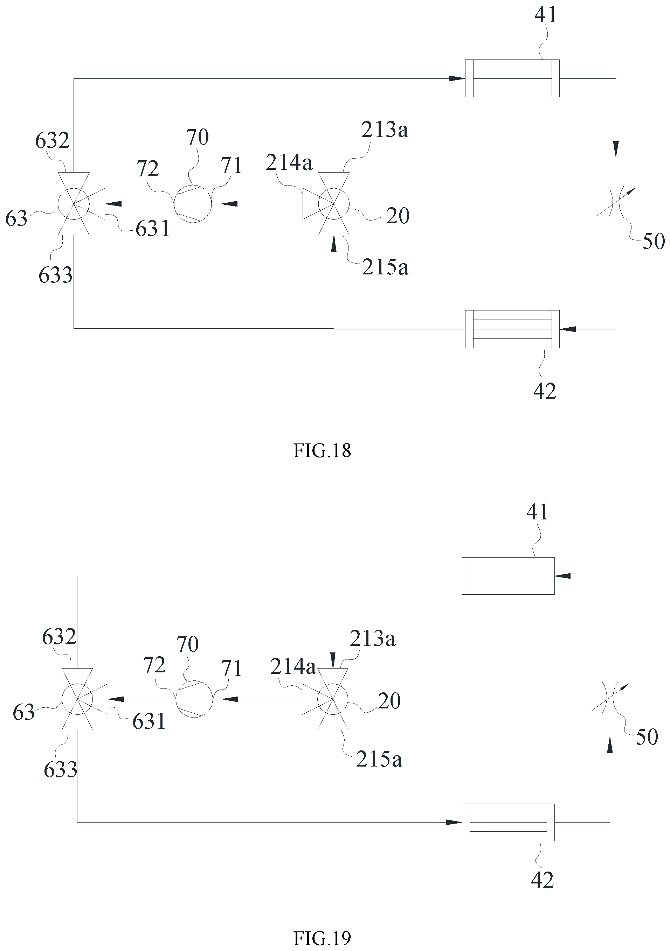

As shown in FIGS. 18 and 19, similarities between a refrigeration system of a second embodiment of the present disclosure and the refrigeration system of the first embodiment will not be repeated, and differences are as follows.

In embodiments of the present disclosure, a three-way valve 63 is adopted to replace the first valve 61 and the second valve 62 of the first embodiment.

The three-way valve 63 has an inlet 631, a first outlet 632, and a second outlet 633. The inlet 631 is in communication with the second through hole 214a of the switching valve 20. The first outlet 632 is in communication with the first through hole 213a of the switching valve 20 and is in communication with the outdoor heat exchanger 41. The second outlet 633 is in communication with the third through hole 215a of the switching valve 20 and is in communication with the indoor heat exchanger 42.

As shown in FIG. 18, in the cooling mode, the second outlet 633 of the three-way valve 63 is closed, and the inlet 631 is in communication with the first outlet 632. A fluid flow direction of the fluid is the same as in the cooling mode of the first embodiment, and will not be repeated here.

As shown in FIG. 19, in the heating mode, the first outlet 632 of the three-way valve 63 is closed, and the inlet 631 is in communication with the second outlet 633. A fluid flow direction of the fluid is the same as in the heating mode of the first embodiment, and will not be repeated here.

In one embodiment, the three-way valve 63 may be a shut-off valve, a solenoid valve, or the like.

The present disclosure further relates to a four-way valve that is a pipeline accessory configured to open and close pipelines, control flow direction, regulate and control parameters of a conveyed medium. However, during operation, sealing assemblies of some valves in the related art (such as ball valves and slide valves) are subjected to constant wear, resulting in shorter service life of the valves.

Embodiments of the present disclosure provides a four-way valve that prolongs its service life to a certain extent, solving the problem of short service life of the valves in the related art.

The four-way valve according to embodiments of the present disclosure includes:
a mounting seat having a first chamber, a second chamber, a first flow channel, a second flow channel, a third flow channel, and a fourth flow channel, wherein the first flow channel is in communication with the first chamber and the second chamber, the second flow channel is in communication with the first chamber and the second chamber, the third flow channel is in communication with the first chamber, and the fourth flow channel is in communication with the second chamber;
a switching valve, at least partially located in the first chamber, and including a piston assembly, wherein the piston assembly is disposed in the first chamber and configured to be driven by fluid pressure to move between a first position and a second position relative to the mounting seat; in the first position, the piston assembly closes a path within the first chamber that connects the second flow channel and the third flow channel, and opens a path within the first chamber that connects the first flow channel and the third flow channel; in the second position, the piston assembly opens the path within the first chamber that connects the second flow channel and the third flow channel, and closes the path within the first chamber that connects the first flow channel and the third flow channel; and
a second valve assembly, at least partially located in the second chamber, and including a second piston assembly, wherein the second piston assembly is disposed in the second chamber and is movable between a third position and a fourth position relative to the mounting seat; in the third position, the second piston assembly opens a path within the second chamber that connects the second flow channel and the fourth flow channel, and closes a path within the second chamber that connects the first flow channel and the fourth flow channel; in the fourth position, the second piston assembly opens the path within the second chamber that connects the first flow channel and the fourth flow channel, and closes the path within the second chamber that connects the second flow channel and the fourth flow channel.

According to some embodiments of the present disclosure, the switching valve further includes a valve seat, at least a part of the valve seat is fixedly mounted in the first chamber, the valve seat has a valve cavity in communication with the first chamber, and the valve cavity has a first valve port and a second valve port; the first flow channel is in communication with the third flow channel through the second valve port, and the second flow channel is in communication with the third flow channel through the first valve port; the piston assembly is disposed in the valve cavity; in the first position, the piston assembly closes the first valve port and opens the second valve port; and in the second position, the piston assembly closes the second valve port and opens the first valve port.

According to some embodiments of the present disclosure, the piston assembly closes the first valve port by a first sealing member, and the piston assembly closes the second valve port by a second sealing member.

According to some embodiments of the present disclosure, the first chamber includes:
a first mounting channel penetrating a side surface of the mounting seat, the valve seat being fixedly mounted in the first mounting channel;
a first communication channel surrounding an outer periphery of the first mounting channel and being in communication with the first mounting channel; the first flow channel being in communication with the first communication channel;
a second communication channel surrounding the outer periphery of the first mounting channel and being in communication with the first mounting channel; the third flow channel being in communication with the second communication channel; and
a third communication channel surrounding the outer periphery of the first mounting channel and being in communication with the first mounting channel; the second flow channel being in communication with the third communication channel.

According to some embodiments of the present disclosure, a third sealing member, a fourth sealing member, and a fifth sealing member are further provided in the first mounting channel;
the third sealing member is sealed between the valve seat and an inner wall surface of the first mounting channel and is configured to isolate the first communication channel from an external space of the mounting seat;
the fourth sealing member is sealed between the valve seat and the inner wall surface of the first mounting channel and is configured to isolate the first communication channel from the second communication channel;
the fifth sealing member is sealed between the valve seat and the inner wall surface of the first mounting channel and is configured to isolate the second communication channel from the third communication channel.

According to some embodiments of the present disclosure, the first communication channel, the second communication channel, and the third communication channel are arranged sequentially in a movement direction of the piston assembly.

According to some embodiments of the present disclosure, the second valve assembly further includes a second valve seat, at least a part of the second valve seat is fixedly mounted in the second chamber, the second valve seat has a second valve cavity in communication with the second chamber, the second valve cavity has a third valve port and a fourth valve port, the first flow channel is in communication with the fourth flow channel through the fourth valve port, and the second flow channel is in communication with the fourth flow channel through the third valve port; the second piston assembly is disposed in the second chamber; in the third position, the second piston assembly closes the fourth valve port and opens the third valve port; and in the fourth position, the second piston assembly closes the third valve port and opens the fourth valve port.

According to some embodiments of the present disclosure, the second chamber includes:
a second mounting channel penetrating a side surface of the mounting seat, the second valve seat being fixedly mounted in the second mounting channel;
a fourth communication channel surrounding an outer periphery of the second mounting channel and being in communication with the second mounting channel; the first flow channel being in communication with the fourth communication channel;
a fifth communication channel surrounding the outer periphery of the second mounting channel and being in communication with the second mounting channel; the fourth flow channel being in communication with the fifth communication channel; and
a sixth communication channel connected to an end of the second mounting channel and being in communication with the second mounting channel; the second flow channel being in communication with the sixth communication channel.

According to some embodiments of the present disclosure, a sixth sealing member, a seventh sealing member, and an eighth sealing member are further provided in the second mounting channel;
the sixth sealing member is sealed between the second valve seat and an inner wall surface of the second mounting channel and is configured to isolate the fourth communication channel from an external space of the mounting seat;
the seventh sealing member is sealed between the second valve seat and the inner wall surface of the second mounting channel and is configured to isolate the fourth communication channel from the fifth communication channel;
the eighth sealing member is sealed between the second valve seat and the inner wall surface of the second mounting channel and is configured to isolate the fifth communication channel from the sixth communication channel.

According to some embodiments of the present disclosure, the fourth communication channel, the fifth communication channel, and the sixth communication channel are arranged sequentially in a movement direction of the second piston assembly.

According to some embodiments of the present disclosure, the mounting seat has a first outer surface, a second outer surface, and a third outer surface that are non-coplanar;
the first flow channel and the second flow channel penetrate the first outer surface; the third flow channel and the fourth flow channel penetrate the second outer surface; and the first chamber and the second chamber penetrate the third outer surface.

According to some embodiments of the present disclosure, the first flow channel and the second flow channel form, with the first outer surface, a first opening and a second opening, respectively, and an arrangement direction of the first opening and the second opening is defined as a first direction;
the third flow channel and the fourth flow channel form, with the second outer surface, a third opening and a fourth opening, respectively, and an arrangement direction of the third opening and the fourth opening is defined as a second direction;
the first chamber and the second chamber form, with the third outer surface, a fifth opening and a sixth opening, respectively, and an arrangement direction of the fifth opening and the sixth opening is defined as the second direction;
the first direction is perpendicular to the second direction.

One of the embodiments disclosed above has at least the following advantages or beneficial effects:
For the four-way valve according to embodiments of the present disclosure, the piston assembly closes the path within the first chamber that connects the second flow channel and the third flow channel, and opens the path within the first chamber that connects the first flow channel and the third flow channel, when in the first position; the piston assembly closes the path within the first chamber that connects the first flow channel and the third flow channel, and opens the path within the first chamber that connects the second flow channel and the third flow channel, when in the second position. Thus, in the first position, a part of the piston assembly configured to seal one of the paths is not compressed; in the second position, a part of the piston assembly configured to seal the other of the paths is not compressed; during movement of the piston assembly between the first position and the second position, at least one of the two parts of the piston assembly configured to close the two paths can be relieved and relaxed and is not constantly subjected to wear, thereby prolonging the service life.

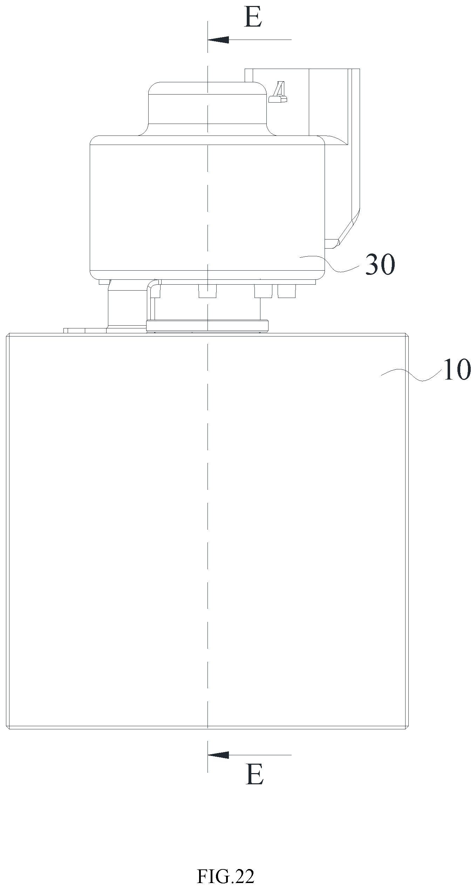

As shown in FIGS. 20 to 22, the four-way valve of embodiments of the present disclosure includes a mounting seat 10, a switching valve 20, and a second valve assembly 30. The switching valve 20 and the second valve assembly 30 are fixedly mounted on the mounting seat 10.

The shape of the mounting seat 10 is not particularly limited in the present disclosure; for example, the mounting seat 10 may be prismatic, cylindrical, etc.

In embodiments of the present disclosure, the shape of the mounting seat 10 is cubic, but not limited thereto.

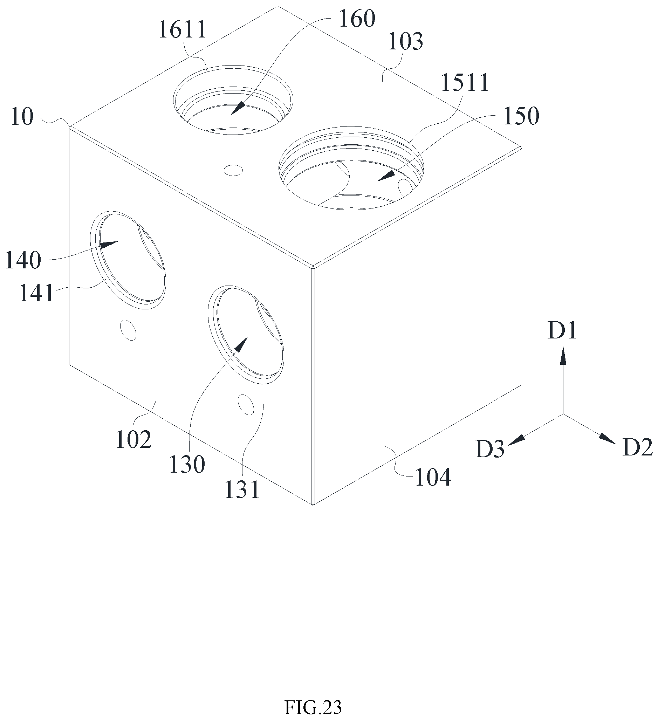

As shown in FIGS. 23 to 25, the mounting seat 10 of embodiments of the present disclosure has a first chamber 150, a second chamber 160, a first flow channel 110, a second flow channel 120, a third flow channel 130, and a fourth flow channel 140. The first flow channel 110 is in communication with the first chamber 150 and the second chamber 160; the second flow channel 120 is in communication with the first chamber 150 and the second chamber 160; the third flow channel 130 is in communication with the first chamber 150; and the fourth flow channel 140 is in communication with the second chamber 160.

The mounting seat 10 has a first outer surface 101, a second outer surface 102, and a third outer surface 103, which are non-coplanar. The first flow channel 110 and the second flow channel 120 penetrate the first outer surface 101; the third flow channel 130 and the fourth flow channel 140 penetrate the second outer surface 102; the first chamber 150 and the second chamber 160 penetrate the third outer surface 103.

Still referring to FIGS. 23 to 25, the first flow channel 110 and the second flow channel 120 form, together with the first outer surface 101, a first opening 111 and a second opening 121, respectively. An arrangement direction of the first opening 111 and the second opening 121 is defined as a first direction D1. The third flow channel 130 and the fourth flow channel 140 form, together with the second outer surface 102, a third opening 131 and a fourth opening 141, respectively. An arrangement direction of the third opening 131 and the fourth opening 141 is defined as a second direction D2. The first chamber 150 and the second chamber 160 form, together with the third outer surface 103, a fifth opening 1511 and a sixth opening 1611, respectively. An arrangement direction of the fifth opening 1511 and the sixth opening 1611 is defined as the second direction D2. The first direction D1 is perpendicular to the second direction D2.

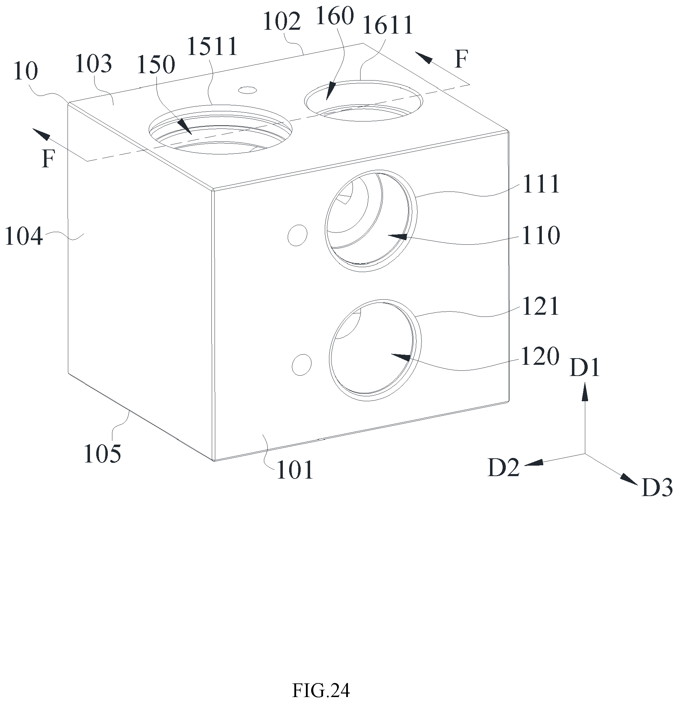

As shown in FIGS. 23 and 24, a third direction D3 is defined, which is perpendicular to the first direction D1 and the second direction D2. In embodiments of the present disclosure, the first outer surface 101 and the second outer surface 102 are arranged opposite each other along the third direction D3, and two ends of the third outer surface 103 along the third direction D3 are connected to the first outer surface 101 and the second outer surface 102, respectively.

The mounting seat 10 further has two fourth outer surfaces 104 and a fifth outer surface 105. The two fourth outer surfaces 104 are arranged opposite each other along the second direction D2, and each fourth outer surface 104 is connected to the first outer surface 101, the second outer surface 102, and the third outer surface 103. The fifth outer surface 105 is arranged opposite to the third outer surface 103 along the first direction D1, and is connected to the first outer surface 101, the second outer surface 102, and the two fourth outer surfaces 104.

It can be understood that there are various embodiments for the arrangement positions of the first opening 111, the second opening 121, the third opening 131, the fourth opening 141, the fifth opening 1511, and the sixth opening 1611 on the mounting seat 10. For example, in one embodiment, the first opening 111 and the second opening 121, as well as the third opening 131 and the fourth opening 141 are arranged on two opposite outer surfaces, such as the first opening 111 and the second opening 121 being arranged on one of the fourth outer surfaces 104, while the third opening 131 and the fourth opening 141 being arranged on the other fourth outer surface 104. In another embodiment, the first opening 111 and the second opening 121, as well as the third opening 131 and the fourth opening 141 are arranged on two adjacent outer surfaces of the mounting seat 10, such as the first opening 111 and the second opening 121 being arranged on the first outer surface 101, while the third opening 131 and the fourth opening 141 being arranged on one of the fourth outer surfaces 104.

At least a part of the switching valve 20 is located within the first chamber 150. The switching valve 20 includes a piston assembly 220, and the piston assembly 220 is disposed within the first chamber 150 and is movable relative to the mounting seat 10 between a first position and a second position. In the first position, the piston assembly 220 closes a path within the first chamber 150 that connects the second flow channel 120 and the third flow channel 130, and opens a path within the first chamber 150 that connects the first flow channel 110 and the third flow channel 130. In the second position, the piston assembly 220 opens the path within the first chamber 150 that connects the second flow channel 120 and the third flow channel 130, and closes the path within the first chamber 150 that connects the first flow channel 110 and the third flow channel 130.

At least a part of the second valve assembly 30 is located within the second chamber 160. The second valve assembly 30 includes a second piston assembly 320, and the second piston assembly 320 is disposed within the second chamber 160 and is movable relative to the mounting seat 10 between a third position and a fourth position. In the third position, the second piston assembly 320 opens a path within the second chamber 160 that connects the second flow channel 120 and the fourth flow channel 140, and closes a path within the second chamber 160 that connects the first flow channel 110 and the fourth flow channel 140. In the fourth position, the second piston assembly 320 opens the path within the second chamber 160 that connects the first flow channel 110 and the fourth flow channel 140, and closes the path within the second chamber 160 that connects the second flow channel 120 and the fourth flow channel 140.

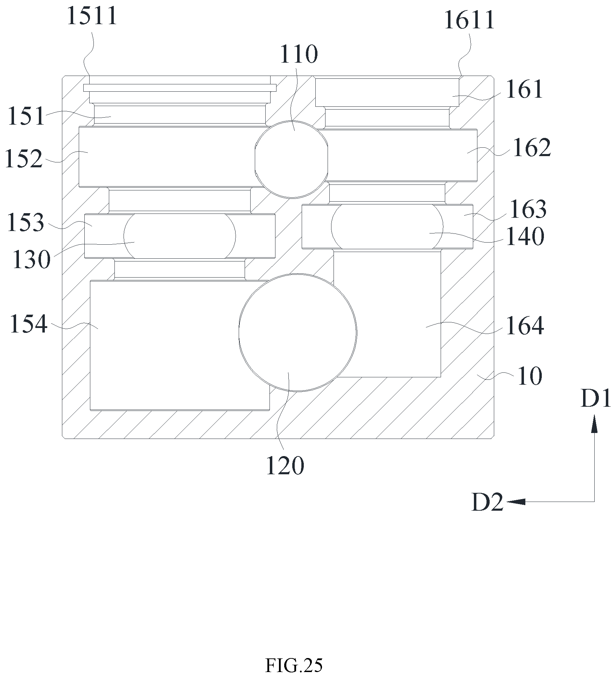

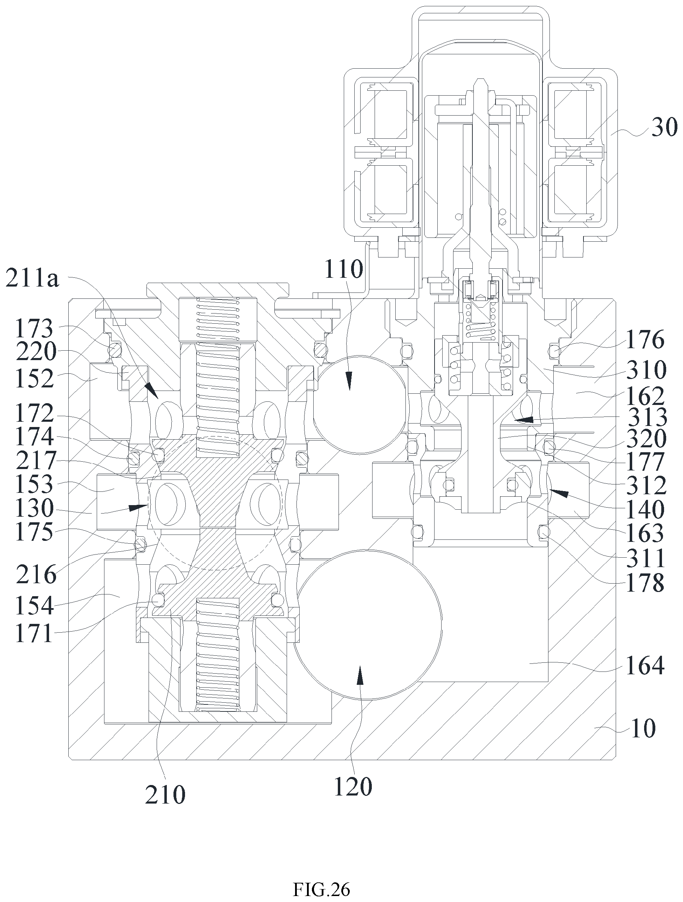

As shown in FIGS. 25 and 26, the switching valve 20 further includes a valve seat 210 fixedly mounted in the first chamber 150. The valve seat 210 has a valve cavity 211a in communication with the first chamber 150, and the valve cavity 211a has a first valve port 216 and a second valve port 217. The first flow channel 110 is in communication with the third flow channel 130 through the second valve port 217, and the second flow channel 120 is in communication with the third flow channel 130 through the first valve port 216. The piston assembly 220 is disposed within the valve cavity 211a and is movable relative to the valve seat 210 between a first position and a second position. In the first position, the piston assembly 220 closes the first valve port 216 through a first sealing member 171 and opens the second valve port 217. In the second position, the piston assembly 220 closes the second valve port 217 through a second sealing member 172 and opens the first valve port 216.

The second valve assembly 30 further includes a second valve seat 310 fixedly mounted in the second chamber 160. The second valve seat 310 has a second valve cavity 313 in communication with the second chamber 160, and the second valve cavity 313 has a third valve port 311 and a fourth valve port 312. The first flow channel 110 is in communication with the fourth flow channel 140 through the fourth valve port 312, and the second flow channel 120 is in communication with the fourth flow channel 140 through the third valve port 311. The second piston assembly 320 is disposed within the second valve cavity 313 and is movable relative to the second valve seat 310 between a third position and a fourth position. In the third position, the second piston assembly 320 closes the fourth valve port 312 and opens the third valve port 311. In the fourth position, the second piston assembly 320 closes the third valve port 311 and opens the fourth valve port 312.

It can be understood that in the four-way valve of embodiments of the present disclosure, when the piston assembly 220 is in the first position, the first valve port 216 is closed by the first sealing member 171, and the second valve port 217 is opened; when the piston assembly 220 is in the second position, the second valve port 217 is closed by the second sealing member 172, and the first valve port 216 is opened. Thus, in the first position, the second sealing member 172 is not compressed by the piston assembly 220 and the second valve port 217; in the second position, the first sealing member 171 is not compressed by the second piston assembly 320 and the first valve port 216; during movement of the piston assembly 220 between the first position and the second position, at least one of the first sealing member 171 and the second sealing member 172 can be relieved and relaxed and is not constantly subjected to wear, thereby prolonging the service life of the four-way valve.

It should be noted that the piston assembly 220 closes the first valve port 216 and the second valve port 217 by the first sealing member 171 and the second sealing member 172, respectively, and may be considered as soft sealing. In other embodiments, the first sealing member 171 and the second sealing member 172 may be omitted, resulting in hard sealing between the piston assembly 220 and the first valve port 216 and the second valve port 217.

Furthermore, in other embodiments, the valve seat 210 of the switching valve 20 may be omitted, and the first chamber 150 of the mounting seat 10 is provided with the first valve port 216 and the second valve port 217.

Similarly, the second valve seat 310 of the second valve assembly 30 may be omitted, and the first chamber 150 of the mounting seat 10 is provided with the third valve port 311 and the fourth valve port 312.

In one embodiment, the switching valve 20 of embodiments of the present disclosure is a differential pressure valve, and the second valve assembly 30 is an electronic expansion valve, but they are not limited thereto. When the piston assembly 220 is a differential pressure valve, the piston assembly 220 is configured to be driven by the fluid pressure to move between the first position and the second position.

In embodiments of the present disclosure, movement directions of the piston assembly 220 and the second piston assembly 320 are parallel to each other and parallel to the first direction D1. For ease of explanation, a direction indicated by an arrow in FIG. 26 is defined as up, and an opposite direction is defined as down.

The flow path switching of the four-way valve of embodiments of the present disclosure will be explained in detail below by way of an example where the switching valve 20 is a differential pressure valve and the second valve assembly 30 is an electronic expansion valve.

As shown in FIG. 26, when the second piston assembly 320 moves downward along the first direction D1 until it reaches the fourth position, the second piston assembly 320 closes the third valve port 311 and opens the fourth valve port 312. At this point, the first flow channel 110 is in communication with the fourth flow channel 140 through the fourth valve port 312, while the second flow channel 120 is not in communication with the fourth flow channel 140. If high-pressure fluid flows into the fourth flow channel 140, the fluid flows into the first flow channel 110 through the fourth valve port 312, and the fluid in the first flow channel 110 is in a high-pressure state. The fluid enters the valve cavity 211a of the valve seat 210, and the piston assembly 220 moves downward (towards the second position) under the action of the fluid pressure. When the piston assembly 220 moves to the second position, the piston assembly 220 closes the second valve port 217 through the second sealing member 172 and opens the first valve port 216. At this point, the second flow channel 120 is in communication with the third flow channel 130, while the first flow channel 110 is not in communication with the third flow channel 130. The high-pressure fluid flowing out of the first flow channel 110 is converted into low-pressure fluid after being processed by other devices, flows into the second flow channel 120, enters the valve cavity 211a, and flows out of the third flow channel 130. When the second piston assembly 320 moves upward along the first direction D1 until it reaches the third position, the second piston assembly 320 closes the fourth valve port 312 and opens the third valve port 311. At this point, the second flow channel 120 is in communication with the fourth flow channel 140, while the first flow channel 110 is not in communication with the fourth flow channel 140. If high-pressure fluid flows into the fourth flow channel 140, the fluid flows into the second flow channel 120 through the third valve port 311, and the fluid in the second flow channel 120 is in a high-pressure state. The fluid enters the valve cavity 211a of the valve seat 210, and the piston assembly 220 moves upward (towards the first position) under the action of the fluid pressure. When the piston assembly 220 moves to the first position, the piston assembly 220 closes the first valve port 216 through the first sealing member 171 and opens the second valve port 217. At this point, the first flow channel 110 is in communication with the third flow channel, while the second flow channel 120 is not in communication with the third flow channel 130. The high-pressure fluid flowing out of the second flow channel 120 is converted into low-pressure fluid after being processed by other devices, flows into the first flow channel 110, enters the valve cavity 211a, and flows out of the third flow channel 130.

Therefore, in embodiments of the present disclosure, the function of the four-way valve is achieved by cooperation of the switching valve 20, the second valve assembly 30, and the mounting seat 10.

It can be understood that the switching valve 20 adopts a differential pressure valve, which can realize the flow path switching without need for electrical power during operation, and has advantages of a simple structure and low cost.

Furthermore, for the second valve assembly 30, the structure for driving the second piston assembly 320 to move between the third position and the fourth position may utilize mature techniques in the related art, which will not be elaborated herein.

As shown in FIG. 25, the first chamber 150 includes a first mounting channel 151, a first communication channel 152, a second communication channel 153, and a third communication channel 154. The first mounting channel 151 extends along the first direction D1 and penetrates one side surface of the mounting seat 10. The valve seat 210 is fixedly mounted in the first mounting channel 151. In embodiments of the present disclosure, the first mounting channel 151 penetrates the third outer surface 103 of the mounting seat 10, and the first mounting channel 151 and the third outer surface 103 form the fifth opening 1511.

The first communication channel 152 surrounds an outer periphery of the first mounting channel 151 and is in communication with the first mounting channel 151. The first flow channel 110 is in communication with the first communication channel 152. The second communication channel 153 surrounds the outer periphery of the first mounting channel 151 and is in communication with the first mounting channel 151. The third flow channel 130 is in communication with the second communication channel 153. The third communication channel 154 surrounds the outer periphery of the first mounting channel 151 and is in communication with the first mounting channel 151. The second flow channel 120 is in communication with the third communication channel 154.

In embodiments of the present disclosure, the first communication channel 152, the second communication channel 153, and the third communication channel 154 are arranged sequentially in the movement direction of the piston assembly 220. The first communication channel 152 surrounds an outer periphery of a part of the first mounting channel 151 close to the fifth opening 1511. The third communication channel 154 surrounds an outer periphery of a part of the first mounting channel 151 away from the fifth opening 1511. The second communication channel 153 is located between the first communication channel 152 and the third communication channel 154, and surrounds a middle part of the first mounting channel 151 along the first direction D1.

Still referring to FIG. 25, the second chamber 160 includes a second mounting channel 161, a fourth communication channel 162, a fifth communication channel 163, and a sixth communication channel 164. The second mounting channel 161 extends along the first direction D1 and penetrates one side surface of the mounting seat 10. The second valve seat 310 is fixedly mounted in the second mounting channel 161. In embodiments of the present disclosure, the second mounting channel 161 penetrates the third outer surface 103 of the mounting seat 10, and the second mounting channel 161 and the third outer surface 103 form the sixth opening 1611.

The fourth communication channel 162 surrounds an outer periphery of the second mounting channel 161 and is in communication with the second mounting channel 161. The first flow channel 110 is in communication with the fourth communication channel 162. The fifth communication channel 163 surrounds the outer periphery of the second mounting channel 161 and is in communication with the second mounting channel 161. The fourth flow channel 140 is in communication with the fifth communication channel 163. The sixth communication channel 164 is connected to one end of the second mounting channel 161 and is in communication with the second mounting channel 161. The second flow channel 120 is in communication with the sixth communication channel 164.

In embodiments of the present disclosure, the fourth communication channel 162, the fifth communication channel 163, and the sixth communication channel 164 are arranged sequentially in the movement direction of the second piston assembly 320. The fourth communication channel 162 surrounds an outer periphery of a part of the second mounting channel 161 close to the sixth opening 1611. The sixth communication channel 164 is connected to an end of the second mounting channel 161 away from the sixth opening 1611. The fifth communication channel 163 is located between the fourth communication channel 162 and the sixth communication channel 164.

In the second direction D2, the first flow channel 110 is located between the first mounting channel 151 and the second mounting channel 161, and the second flow channel 120 is located between the first mounting channel 151 and the second mounting channel 161.

As shown in FIG. 26, the first mounting channel 151 is internally provided with a third sealing member 173, a fourth sealing member 174, and a fifth sealing member 175. The third sealing member 173 is sealed between the valve seat 210 and an inner wall surface of the first mounting channel 151 and is configured to isolate the first communication channel 152 from an external space of the mounting seat 10. The fourth sealing member 174 is sealed between the valve seat 210 and the inner wall surface of the first mounting channel 151 and is configured to isolate the first communication channel 152 from the second communication channel 153. The fifth sealing member 175 is sealed between the valve seat 210 and the inner wall surface of the first mounting channel 151 and is configured to isolate the second communication channel 153 from the third communication channel 154.

It should be noted that in one embodiment, in a case where the switching valve 20 includes the valve seat 210, a part of the valve seat 210 located between the fourth sealing member 174 and the fifth sealing member 175 may be omitted. In other words, in embodiments of the present disclosure, the valve seat 210 is divided into two mutually independent parts, one of which corresponds to the first communication channel 152 and the other of which corresponds to the third communication channel 154.

In another embodiment, a part of the valve seat 210 located below the fourth sealing member 174 may be completely omitted.

The second mounting channel 161 is internally provided with a sixth sealing member 176, a seventh sealing member 177, and an eighth sealing member 178. The sixth sealing member 176 is sealed between the second valve seat 310 and an inner wall surface of the second mounting channel 161 and is configured to isolate the fourth communication channel 162 from the external space of the mounting seat 10. The seventh sealing member 177 is sealed between the second valve seat 310 and the inner wall surface of the second mounting channel 161 and is configured to isolate the fourth communication channel 162 from the fifth communication channel 163. The eighth sealing member 178 is sealed between the second valve seat 310 and the inner wall surface of the second mounting channel 161 and is configured to isolate the fifth communication channel 163 from the sixth communication channel 164.

It can be understood that the first to eighth sealing members mentioned above may all be sealing rings, but are not limited thereto.

It can be understood that various embodiments/implementations provided in the present disclosure may be combined with each other without contradiction, and will not be elaborated herein.

In the disclosed embodiments, terms such as "first," "second," and "third" are only used for descriptive purposes and should not be construed as indicating or implying relative importance; the term "a plurality of" refers to two or more, unless otherwise specified. Terms such as "mounted," "connected," "coupled," and "fixed" should be interpreted broadly. For example, the term "connected" may refer to a fixed connection, a detachable connection, or an integral connection, and the term "coupled" may refer to a direct connection or an indirect connection through an intermediate medium. The specific meanings of the above terms in the disclosed embodiments can be understood by those skilled in the art according to specific situations.

In the description of the disclosed embodiments, it should be understood that terms such as "up," "down," "left," "right," "front," and "rear" indicate orientation or positional relationships based on the orientation or positional relationships shown in the accompanying drawings, which are only for ease of describing the disclosed embodiments and simplifying the description, rather than indicate or imply that the device or unit referred to must have a specific orientation or be constructed and operated in a specific orientation, and thus cannot be understood as limitations on the disclosed embodiments.

In the description of this specification, terms such as "one embodiment," "some embodiments," and "specific embodiments" are intended to indicate that specific features, structures, materials, or characteristics described in conjunction with the embodiments or examples are included in at least one of the disclosed embodiments or examples. In this specification, illustrative expressions of the above terms do not necessarily refer to the same embodiment or example. Moreover, the specific features, structures, materials, or characteristics described may be combined in any one or more embodiments or examples in an appropriate manner.

The above are merely preferred embodiments of the present disclosure and are not intended to limit the present disclosure. Those skilled in the art will appreciate that the disclosed embodiments may have various modifications and variations. Any modifications, equivalent substitutions, and improvements made within the spirit and principles of the present disclosure shall be included within the protection scope of the present disclosure.

## Claims

1. A switching valve, comprising:
a valve seat having a valve cavity for fluid flow; and
a piston assembly configured to be driven by fluid pressure and movably accommodated in the valve cavity,
wherein the valve cavity has a first sub-cavity, a second sub-cavity, and a third sub-cavity in a movement direction of the piston assembly, and the second sub-cavity is between the first sub-cavity and the second sub-cavity; the valve cavity is further provided with a first valve port for connecting the second sub-cavity and the third sub-cavity, and a second valve port for connecting the first sub-cavity and the second sub-cavity;
the valve seat further has a first through hole, a second through hole, and a third through hole, the first through hole is in communication with the first sub-cavity, the second through hole is in communication with the second sub-cavity, and the third through hole is in communication with the third sub-cavity;
in a first position, the piston assembly closes the first valve port and opens the second valve port; and in a second position, the piston assembly closes the second valve port and opens the first valve port.

2. The switching valve according to claim 1, wherein the piston assembly is movably connected to the valve seat through a guide structure, and the guide structure is configured to guide the piston assembly to move along the movement direction.

3. The switching valve according to claim 2, wherein the piston assembly comprises two movable members arranged along the movement direction, and the two movable members are linked; in the first position, one of the movable members closes the first valve port; and in the second position, the other of the movable members closes the second valve port;
each of the movable members is movably connected to the valve seat through one guide structure.

4. The switching valve according to claim 3, wherein the guide structure comprises a guide groove and a guide column, the guide groove is provided on one of the valve seat and the movable member, the guide column is provided on the other of the valve seat and the movable member, the guide column is inserted into the guide groove, and the guide column is in a guiding fit with the guide groove along the movement direction.

5. The switching valve according to claim 4, wherein each guide column is provided with a receiving groove with an opening facing a bottom surface of the guide groove;
the switching valve further comprises two elastic members accommodated in two receiving grooves, respectively; two ends of each elastic member abut against the bottom surface of the guide groove and a bottom surface of the receiving groove, respectively; each elastic member is configured to apply elastic force to one movable member corresponding to the elastic member to move the movable member towards the other movable member.

6. The switching valve according to claim 3, wherein the valve seat comprises a seat body and two stop members, the seat body has the first sub-cavity, the second sub-cavity, and the third sub-cavity, and the seat body is further provided with the first through hole and the third through hole on both sides of the seat body along the movement direction; the two stop members are fixed in the first through hole and the third through hole, respectively; the two movable members are located between the two stop members; each of the movable members is movably connected to the stop member through one guide structure.

7. The switching valve according to claim 6, wherein the guide structure comprises a guide rod and a guide hole, the guide rod is provided on one of the movable member and the stop member, the guide hole is provided on the other of the movable member and the stop member, the guide rod is inserted through the guide hole, and the guide rod is in a guiding fit with the guide hole in the movement direction.

8. The switching valve according to claim 7, wherein the switching valve further comprises two elastic members fitted over on outer peripheries of the two guide rods, respectively; two ends of each elastic member abut against the stop member and the movable member, respectively; each elastic member is configured to apply elastic force to one movable member corresponding to the elastic member to move the movable member towards the other movable member.

9. The switching valve according to claim 1, wherein the piston assembly comprises a first closing portion configured to close the first valve port and a second closing portion configured to close the second valve port, and the first closing portion and the second closing portion are spaced apart along the movement direction;
a side of the first closing portion facing away from the second closing portion has a first pressure-receiving surface, and a side of the second closing portion facing away from the first closing portion has a second pressure-receiving surface;
in the first position, there is a first gap between the second pressure-receiving surface and an inner wall surface of the valve cavity; and in the second position, there is a second gap between the first pressure-receiving surface and the inner wall surface of the valve cavity.

10. The switching valve according to claim 1, wherein the valve seat comprises a hollow cylinder and two blocking members, an interior of the cylinder defines a cavity, two axial ends of the cylinder are provided with openings in communication with the cavity, the two blocking members are connected to the two axial ends of the cylinder and block two openings, respectively, and the cylinder and the two blocking members jointly form the valve cavity;
the cylinder has a first inner ring surface and a second inner ring surface, the first inner ring surface surrounds the third sub-cavity, and the second inner ring surface surrounds the first sub-cavity;
an outer periphery of the piston assembly has a first outer ring surface in a guiding fit with the first inner ring surface, and a second outer ring surface in a guiding fit with the second inner ring surface.

11. The switching valve according to claim 10, wherein the piston assembly comprises two movable members arranged along the movement direction, which are defined as a first movable member and a second movable member; in the first position, the first movable member closes the first valve port; in the second position, the second movable member closes the second valve port;
an inner wall surface of the cylinder is further provided with a first annular protrusion and a second annular protrusion, which are spaced apart along an axial direction of the cylinder; the first annular protrusion is located between the second sub-cavity and the third sub-cavity and defines the first valve port; the second annular protrusion is located between the first sub-cavity and the second sub-cavity and defines the second valve port.

12. The switching valve according to claim 11, wherein the switching valve further comprises two elastic members; two ends of one of the elastic members abut against the first annular protrusion and the first movable member, respectively, to apply elastic force to the first movable member to move away from the second movable member; two ends of the other of the elastic members abut against the second annular protrusion and the second movable member, respectively, to apply elastic force to the second movable member to move away from the first movable member.

13. The switching valve according to claim 1, wherein the valve seat comprises a valve body and a valve core; the valve body has the first sub-cavity, the second sub-cavity, and the third sub-cavity; the valve core is limited in the second sub-cavity; the valve body is further provided with the first through hole, the second through hole, and the third through hole;
the valve core is a sleeve with openings at both axial ends and has an inner cavity; the piston assembly is movably inserted through the inner cavity; the inner cavity of the valve core is in communication with the second sub-cavity, and the inner cavity is provided with the first valve port and the second valve port.

14. The switching valve according to claim 13, wherein the valve core further has an inner surface facing the inner cavity and an outer surface facing away from the inner cavity; the valve core further has a through bore that penetrates the inner surface and the outer surface; and the inner cavity is in communication with the second sub-cavity via the through bore.

15. The switching valve according to claim 14, wherein the inner surface of the valve core is further provided with a middle portion, and the middle portion has a guiding hole that penetrates the middle portion along the movement direction;
the piston assembly comprises a first movable member, a second movable member, and a connecting rod; the first movable member is movably disposed in the inner cavity and configured to close the first valve port; the second movable member is movably disposed in the inner cavity and configured to close the second valve port; the connecting rod is inserted through the guiding hole; and two axial ends of the connecting rod are connected to the first movable member and the second movable member, respectively.

16. The switching valve according to claim 15, wherein the switching valve further comprises two elastic members fitted over an outer periphery of the connecting rod; two ends of one of the elastic members abut against the first movable member and a side surface of the middle portion facing the first movable member, respectively; two ends of the other of the elastic members abut against the second movable member and a side surface of the middle portion facing the second movable member, respectively.

17. A refrigeration system, comprising:
a device having a fluid outlet and a fluid inlet, a pressure of a fluid flowing out of the device from the fluid outlet being greater than a pressure of a fluid flowing into the device from the fluid inlet; and
a switching valve having a first through hole, a second through hole, and a third through hole, the second through hole of the switching valve being in communication with the fluid inlet,
wherein the device has a first working condition and a second working condition;
in the first working condition, the fluid outlet is in communication with the first through hole, or the fluid outlet is simultaneously in communication with the first through hole and the third through hole; the piston assembly within the switching valve is driven by a fluid pressure difference to cause the switching valve to switch so that the second through hole is in communication with the third through hole;
in the second working condition, the fluid outlet is in communication with the third through hole, or the fluid outlet is simultaneously in communication with the first through hole and the third through hole; the piston assembly within the switching valve is driven by a fluid pressure difference to cause the switching valve to switch so that the first through hole is in communication with the second through hole.

18. A four-way valve, comprising:
a mounting seat having a first chamber, a second chamber, a first flow channel, a second flow channel, a third flow channel, and a fourth flow channel, wherein the first flow channel is in communication with the first chamber and the second chamber, the second flow channel is in communication with the first chamber and the second chamber, the third flow channel is in communication with the first chamber, and the fourth flow channel is in communication with the second chamber;
a switching valve, at least partially located in the first chamber, and comprising a piston assembly, wherein the piston assembly is disposed in the first chamber and configured to be driven by fluid pressure to move between a first position and a second position relative to the mounting seat; in the first position, the piston assembly closes a path within the first chamber that connects the second flow channel and the third flow channel, and opens a path within the first chamber that connects the first flow channel and the third flow channel; in the second position, the piston assembly opens the path within the first chamber that connects the second flow channel and the third flow channel, and closes the path within the first chamber that connects the first flow channel and the third flow channel; and
a second valve assembly, at least partially located in the second chamber, and comprising a second piston assembly, wherein the second piston assembly is disposed in the second chamber and is movable between a third position and a fourth position relative to the mounting seat; in the third position, the second piston assembly opens a path within the second chamber that connects the second flow channel and the fourth flow channel, and closes a path within the second chamber that connects the first flow channel and the fourth flow channel; in the fourth position, the second piston assembly opens the path within the second chamber that connects the first flow channel and the fourth flow channel, and closes the path within the second chamber that connects the second flow channel and the fourth flow channel.

19. The four-way valve according to claim 18, wherein the switching valve further comprises a valve seat, at least a part of the valve seat is fixedly mounted in the first chamber, the valve seat has a valve cavity in communication with the first chamber, and the valve cavity has a first valve port and a second valve port; the first flow channel is in communication with the third flow channel through the second valve port, and the second flow channel is in communication with the third flow channel through the first valve port; the piston assembly is disposed in the valve cavity; in the first position, the piston assembly closes the first valve port and opens the second valve port; and in the second position, the piston assembly closes the second valve port and opens the first valve port.

20. The four-way valve according to claim 19, wherein the piston assembly closes the first valve port by a first sealing member, and the piston assembly closes the second valve port by a second sealing member.

21. The four-way valve according to claim 19, wherein the first chamber comprises:
a first mounting channel penetrating a side surface of the mounting seat, the valve seat being fixedly mounted in the first mounting channel;
a first communication channel surrounding an outer periphery of the first mounting channel and being in communication with the first mounting channel; the first flow channel being in communication with the first communication channel;
a second communication channel surrounding the outer periphery of the first mounting channel and being in communication with the first mounting channel; the third flow channel being in communication with the second communication channel; and
a third communication channel surrounding the outer periphery of the first mounting channel and being in communication with the first mounting channel; the second flow channel being in communication with the third communication channel.

22. The four-way valve according to claim 21, wherein a third sealing member, a fourth sealing member, and a fifth sealing member are further provided in the first mounting channel;
the third sealing member is sealed between the valve seat and an inner wall surface of the first mounting channel and is configured to isolate the first communication channel from an external space of the mounting seat;
the fourth sealing member is sealed between the valve seat and the inner wall surface of the first mounting channel and is configured to isolate the first communication channel from the second communication channel;
the fifth sealing member is sealed between the valve seat and the inner wall surface of the first mounting channel and is configured to isolate the second communication channel from the third communication channel.

23. The four-way valve according to claim 21, wherein the first communication channel, the second communication channel, and the third communication channel are arranged sequentially in a movement direction of the piston assembly.

24. The four-way valve according to claim 18, wherein the second valve assembly further comprises a second valve seat, at least a part of the second valve seat is fixedly mounted in the second chamber, the second valve seat has a second valve cavity in communication with the second chamber, the second valve cavity has a third valve port and a fourth valve port, the first flow channel is in communication with the fourth flow channel through the fourth valve port, and the second flow channel is in communication with the fourth flow channel through the third valve port; the second piston assembly is disposed in the second chamber; in the third position, the second piston assembly closes the fourth valve port and opens the third valve port; and in the fourth position, the second piston assembly closes the third valve port and opens the fourth valve port.

25. The four-way valve according to claim 24, wherein the second chamber comprises:
a second mounting channel penetrating a side surface of the mounting seat, the second valve seat being fixedly mounted in the second mounting channel;
a fourth communication channel surrounding an outer periphery of the second mounting channel and being in communication with the second mounting channel; the first flow channel being in communication with the fourth communication channel;
a fifth communication channel surrounding the outer periphery of the second mounting channel and being in communication with the second mounting channel; the fourth flow channel being in communication with the fifth communication channel; and
a sixth communication channel connected to an end of the second mounting channel and being in communication with the second mounting channel; the second flow channel being in communication with the sixth communication channel.

26. The four-way valve according to claim 25, wherein a sixth sealing member, a seventh sealing member, and an eighth sealing member are further provided in the second mounting channel;
the sixth sealing member is sealed between the second valve seat and an inner wall surface of the second mounting channel and is configured to isolate the fourth communication channel from an external space of the mounting seat;
the seventh sealing member is sealed between the second valve seat and the inner wall surface of the second mounting channel and is configured to isolate the fourth communication channel from the fifth communication channel;
the eighth sealing member is sealed between the second valve seat and the inner wall surface of the second mounting channel and is configured to isolate the fifth communication channel from the sixth communication channel.

27. The four-way valve according to claim 25, wherein the fourth communication channel, the fifth communication channel, and the sixth communication channel are arranged sequentially in a movement direction of the second piston assembly.

28. The four-way valve according to claim 18, wherein the mounting seat has a first outer surface, a second outer surface, and a third outer surface that are non-coplanar;
the first flow channel and the second flow channel penetrate the first outer surface; the third flow channel and the fourth flow channel penetrate the second outer surface; and the first chamber and the second chamber penetrate the third outer surface.

29. The four-way valve according to claim 28, wherein the first flow channel and the second flow channel form, with the first outer surface, a first opening and a second opening, respectively, and an arrangement direction of the first opening and the second opening is defined as a first direction;
the third flow channel and the fourth flow channel form, with the second outer surface, a third opening and a fourth opening, respectively, and an arrangement direction of the third opening and the fourth opening is defined as a second direction;
the first chamber and the second chamber form, with the third outer surface, a fifth opening and a sixth opening, respectively, and an arrangement direction of the fifth opening and the sixth opening is defined as the second direction;
the first direction is perpendicular to the second direction.
